Europäisches Patentamt

(19) European Patent Office

Office européen des brevets

(11) Publication number: **0 026 781**
**B1**

## (12) EUROPEAN PATENT SPECIFICATION

(45) Date of publication of patent specification: **15.08.84**

(51) Int. Cl.³: **B 01 D 47/00, A 21 D 8/00**

(21) Application number: **80900751.1**

(22) Date of filing: **21.03.80**

(86) International application number:
**PCT/US80/00432**

(87) International publication number:
**WO 80/01992 02.10.80 Gazette 80/22**

(54) **METHOD FOR COATING A WORKPIECE.**

(30) Priority: **23.03.79 US 23360**

(43) Date of publication of application:
**15.04.81 Bulletin 81/15**

(45) Publication of the grant of the patent:
**15.08.84 Bulletin 84/33**

(84) Designated Contracting States:
**DE FR GB SE**

(56) References cited:
**DE - A - 2 531 748
GB - A - 1 075 134
US - A - 2 337 983
US - A - 2 385 077
US - A - 3 981 694
US - A - 4 042 539
US - A - 4 128 521
US - A - 4 129 092**

**New York State Department of Health, Division
of Air Resources, issued JANUARY 1969, Jack
D. Lauber, the Control of Solvent Vapor
Emissions, pages 3-5**

(73) Proprietor: **Ford Motor Company
The American Road
Dearborn, MI 48121 (US)**

(72) Inventor: **SCHUETZLE, Dennis
5443 Crispin Way
West Bloomfield, MI 48033 (US)**
Inventor: **TRAICOFF, Robert M.
21724 Connemara Drive
Northville, MI 48167 (US)**

(74) Representative: **Drakeford, Robert William et al,
Ford Motor Company Limited 15/448, Research &
Engineering Centre Laindon
Basildon Essex SS15 6EE (GB)**

(56) References cited:
**Techn. Mitt.Krupp-Werksberichte, Vol. 28, No.
3, issued 1970, E. Kriegel, Siebboden-Wäscher
für die Abluft von Lackieranlagen, Entwicklungs-
und Betriebsergebnissen, pages 97-103**

Courier Press, Leamington Spa, England.

# O 026 781

## Description

This invention relates to a process of coating a workpiece

In industrial spraybooths, workpieces may be coated by the manual or automatic application of sprayable coating compositions. Not all the coating composition, however, associates with the workpieces. Rather, certain airborne components of the coating composition subsist in the atmospheric gases of the spraybooth.

Large volumes of air draw these airborne components to low energy, wet scrubbers. These scrubbers remove particulate material from the air. The problem of other airborne components especially volatile organic compounds normally forming the solvent or carrier for the composition, still remains.

It has been suggested by some that reduction of emission of volatile organic compounds from industrial spraybooths requires extensive hardware modification. Others suggest employment of water base, powder or significantly higher solids coating formulations.

In accordance with this invention, however, high volume, low energy, wet scrubbers now commonly associated with industrial spraybooths, may be operated in a manner that captures certain volatile organic compounds from airborne components that enter the water wash.

According to the present invention, there is provided a process for coating a workpiece which comprises spraying the workpiece in a spraybooth with a coating composition comprising a volatile organic compound having a boiling point of at least 98°C at normal atmospheric pressure and having a solubility in water of at least 6% by weight at 20°C; and scrubbing the atmospheric gases of the spraybooth with an aqueous scrubbing medium capable of capturing the volatile organic compound; characterised in that the concentration of said volatile organic compound in said aqueous scrubbing medium is adjusted during the coating process so that it does not exceed a concentration above that which causes the rate of removal of volatile organic compound from the atmospheric gases to be less than 10% of the rate of removal of the volatile organic compound from the atmospheric gases by the aqueous scrubbing medium when free from the volatile organic compound.

By controlling the concentration of volatile organic compound in the aqueous scrubbing medium, the efficiency with which volatile organic compounds are removed from the atmospheric gases of the spraybooth can be increased without extensive modification of the equipment.

The amount of the volatile organic compounds captured will normally be at least 10% by weight of the weight of the particular volatile organic compound sprayed into the spraybooth, but can be as high as 90% by weight thereof.

The concentration of volatile organic compound in the aqueous scrubbing medium may be controlled by biologically and/or physiochemically removing a portion of the volatile organic compound from the scrubbing water.

Preferably concentration of volatile organic compound in the scrubbing medium should not exceed 50 grams per litre, and is desirably no more than 25 grams per litre, (e.g. 0.1—25 g/L).

The volatile organic compound contained in the coating composition preferably comprises an ester, alcohol, ether or any combination thereof. In one embodiment, the scrubbable coating composition is an etherially linked ester, such as cellosolve acetate.

Spraying of the sprayable coating composition may be by electrostatic application or otherwise; electrostatic application, however, offers additional benefits of higher transfer efficiency than normally achieved by conventional application.

Embodiments of the invention will now be described, by way of example only, with reference to the accompanying drawings, in which:—

Figure 1 illustrates in schematic form one type of paint spray booth with associated (in this case integral) water back sections that may be operated in accordance with this invention. Associated hardware such as pumps, valves, filters, scrubbing devices, etc. have been omitted for simplicity and greater clarity.

Figure 2 illustrates a pilot scale spraybooth with integral water wash back section. This pilot scale spraybooth was used in Pilot Trails I, II, and III in the examples.

Figure 3 is a schematic of the total hydrocarbon content (THC) and gas chromatography (GC) sampling systems of the Pilot Spraybooth of Figure 2.

Figure 4 is a schematic of east water pit system, air sampling lines and analyzers monitored in the assembly plant (AP) trial of the examples.

Figures 5, 6 and 7 are graphs showing solvent uptake in scrubbing water in Pilot Trials I, II and III respectively.

Figures 8 and 9 are graphs showing uptake by scrubbing water during the AP trials using 119B and 120C coating compositions respectively.

Figure 10 is a graph showing the effects of scrubbing during the AP trial using coating composition 120C.

Figure 11 shows schematically the AP stack sampling port and flow measurement port locations.

Figure 12 shows the AP prime spraybooth stack sampling system.

Figure 13 shows the AP stack sample manifold flow regulation system.

2

Figure 14 shows the AP east main enamel spraybooth stack sampling system.

"Scrubbable compound" as used on the following description refers to a volatile organic compound which (1) boils above about 98°C at atmospheric pressure and (2) has a water solubility of at least 6% by weight at 20°C.

Paint spraybooths having a water wash associated therewith are widely used. Although such booths and water washes vary with respect to design and size, they conventionally comprise a low energy, high volume wet scrubber. The wet scrubber permits contact between scrubbing water and airborne emissions from spray painting in the booth.

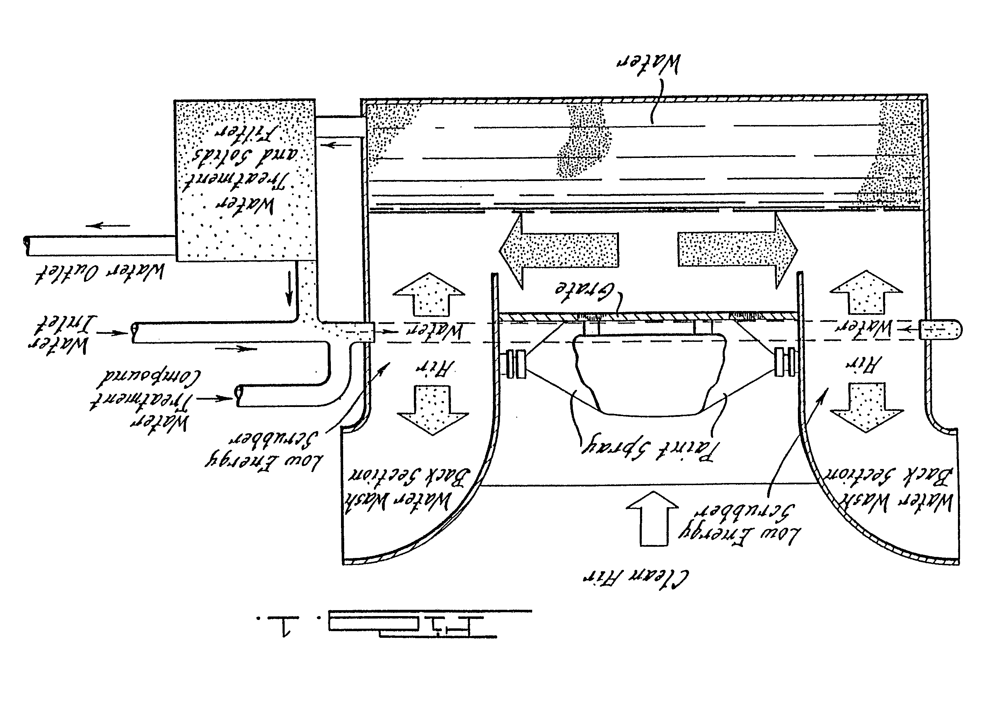

For example, Figure 1 shows schematically one type of spraybooth with associated water wash. Workpieces, e.g., autobodies, such as in Figure 1, enter and exit the spraybooth along a line perpendicular to the spray of a sprayable coating composition and along a grate opening to the water wash. Relatively clean air enters the booth downwardly and perpendicular to the workpieces and grate. The relatively clean air draws subsisting airborne components of the coating composition through the grate into the water wash. The water wash comprises a wet scrubber that takes particulate, and in the case of this invention, an amount of certain volatile organic compounds from the air. The air enters the water wash at a rate of 1415—16980 cubic meters per minute per linear meter (cmm/m) (250—3000 cubic feed per minute per linear foot (cfm/ft)) of the booth, and more usually 2830—8490 cmm/m (500—1500 cfm/ft).

This invention particularly concerns use of high volume, low energy wet scrubbers that operate at inlet and outlet pressure differences below about 2491 Pa (10 inches of water) and even as low as below 1494 Pa (6 inches of water), e.g. 249—1245 Pa (1—5 inches of water) pressure difference. The pressure drop may be determined by pressure measurements at convenient locations within the water wash. For example measurements may be made at locations of just before first water contact and just after last water contact in the water wash; the difference of these measurements is a measure of pressure difference.

Another way to characterize conventional spraybooth wet scrubbers is by what is referred to as amount of particulate that emits after wet scrubbing. For example, certain booths operate at what is often termed as "3" or "5 grain" particulate scrubbing efficiency. "Grain" refers to the amount of particulate per unit volume of air, e.g., 1 grain equals 0.0648 grams standard cubic feet per minute.

Water flow in the water wash may vary. Normally it will be 63—1260 litres per minute per linear meter (5—100 gallons per minute per linear foot) of the spraybooth. Countercurrent air and water flows in the water wash are preferred in accordance with the invention; water washes with concurrent air and water flows should, however, also be suitable.

In the process of this invention, there is selection with respect to the type of sprayable coating composition sprayed. More particularly, the sprayable coating composition is selected to be a scrubbable coating composition. A scrubbable coating composition comprises a scrubbable compound.

Preferred scrubbable compounds comprise oxygenated compounds. More preferred scrubbable compounds are selected from the group consisting of esters, ethers and alcohols. Examples of the esters are mono and di esters such as acetates, adipates, glutarates, succinates and the like. More specifically, examples are cellosolve acetate (i.e. ethylene glycol monoethyl ether acetate), methyl cellosolve acetate (i.e. ethylene glycol monomethyl ether acetate), butyl cellosolve acetate (i.e. ethylene glycol monobutyl ether acetate), butyl acetate, ethyl carbitol acetate (i.e., diethylene glycol monoethyl ether acetate), butyl carbitol acetate (i.e. diethylene glycol monobutyl ether acetate). Examples of the alcohols are amino alcohols such as alkanol amines, ester alcohols, and ether alcohols. More specific examples of alcohols are triethanol amine, butyl carbitol (i.e., diethylene glycol monobutyl ether), cellosolve (i.e. ethylene glycol monoethyl ether), methyl cellosolve (i.e. ethylene glycol monomethyl ether), butanol and ethylene glycol. An example of the ether is diethyl carbitol (ethylene glycol diethyl ether). (For convenience hereinafter, any compound, however, comprising an ester group shall be considered an ester; any compound not comprising an ester group but having an ether group shall be considered an ether).

Advantageously, scrubbable compounds are suitable for use in aqueous and non-aqueous coating compositions at desired levels. The most desired level is as high a percentage of scrubbable compounds of the volatile organic compound in the coating composition as possible, taking into account other factors in usual coating composition formulation. Examples of aqueous and non-aqueous coating compositions are those including thermoplastics, and/or thermosets which, in turn, may be topcoats, sealers, primers, etc.

The process of this invention further includes capture of scrubbable compounds by the scrubbing water in the water wash. "Scrubbing water" as used herein means water in the water wash that comes into scrubbable contact with airborne components of a sprayable coating composition. This contact is, for example, between water of a venturi spray or water curtain or other high volume, low energy scrubber gas-water interface and the airborne components.

As is well known, scrubbing water typically contains water treatment compounds. The process of this invention has not been found to detract from function or employment of typical water treatment compounds.

The usual function of water treatment compounds is to enhance and maintain the ability of scrubbing water to "knock down" or otherwise take particulate from air passing through the water wash. This function includes water treatment compounds that act to "kill" paint overspray. It includes water treatment compounds that may act to detactify, coagulate, precipitate, float or otherwise treat paint overspray. It still further includes water treatment compounds that are surfactants, anti corrosion agents, bacteriocides, fungicides, etc. Examples of water treatment compound formulations include those in U.S. Patents 3,985,955; 4,002,490; 4,090,001; 4,125,576; 4,130,674 and Canadian Patent 589,560.

Especially preferred water treatment compound formulations include amines, aluminates, silicates and the like at a variety of basic pH levels. Preferably, however, the aqueous phase of the scrubbing water has a pH between 7—14, more preferably between about 9.5—11.5. Modifiers of pH may be added on a continuous basis to circulating scrubbing water.

Examples of commercially available water treatment compounds are those identified as Nalco 8724 containing polyelectrolyte; Nalco 8723 containing polyelectrolyte; Nalco 2 containing sodium aluminate, and Nalco 8735.

Having served a function of treatment of paint overspray, water treatment compounds may be removed along with treated overspray by conventional means. The process of this invention preferably includes such a removal and an addition of make up water treatment compounds.

In order that capture by the scrubbing water of scrubbable compound continue in the process of this invention, the scrubbing water has a concentration of scrubbable compound below that which reduces efficiency below about 10% of a maximum efficiency. Normally, such an amount is below 50 grams/liter of scrubbable compound, e.g., between about 0.1—20 grams/liter. Maximum efficiency, however, is when the scrubbing water is essentially free of any scrubbable compound.

Preferred scrubbable coating compositions comprise a scrubbable compound that boils above about 120°C. Uptake by the scrubbing water of such a preferred scrubbable compound continues with a desirable efficiency even when the scrubbing water contains higher levels of scrubbable compounds within the above ranges.

Removal of scrubbable compounds from scrubbing water may be by biological, physicochemical or biological and physicochemical processes; alternatively, the scrubbing water may be simply replaced with fresher (e.g., municipal) water. Examples of physicochemical processes include coagulation, precipitation, filtration, adsorption, ion exchange, membrane separation, and chemical oxidation.

In preferred applications of principles of the invention, several factors play a role in coating composition selection. As mentioned, the sprayable coating composition is selected to be a scrubbable coating composition, i.e., comprise a scrubbable compound. Of course, the higher the level of scrubbable compounds in the organic solvents employed, the more emissions that may be abated.

The pressure drop of the water wash affects efficiency. Higher pressure drops cause more efficient uptake of scrubbable compounds. Further, lower levels of scrubbable compounds in the scrubbing water allows higher efficiencies.

Still other factors that may be considered include the boiling temperature of the scrubbable compound. The scrubbing water generally retains higher boiling scrubbable compounds longer than lower boiling scrubbable compounds, assuming equal solubilities. Similarly, the scrubbing water generally retains more water soluble scrubbable compounds longer then less water soluble scrubbable compounds, assuming equal boiling points.

In these preferred applications, other factors, may affect emissions from the water wash. The amount of emissions abated in accordance with this invention may be generally added to the amount of abatement achieved by these other factors. Examples of these other factors include (1) solids content of the coating composition, (2) transfer efficiency of spray application, e.g., mode of spraying and (3) manner of handling emissions from bake ovens, e.g. incineration by catalyst.

Examples
A. Pilot plant trials
1. Facility and parameters of operation

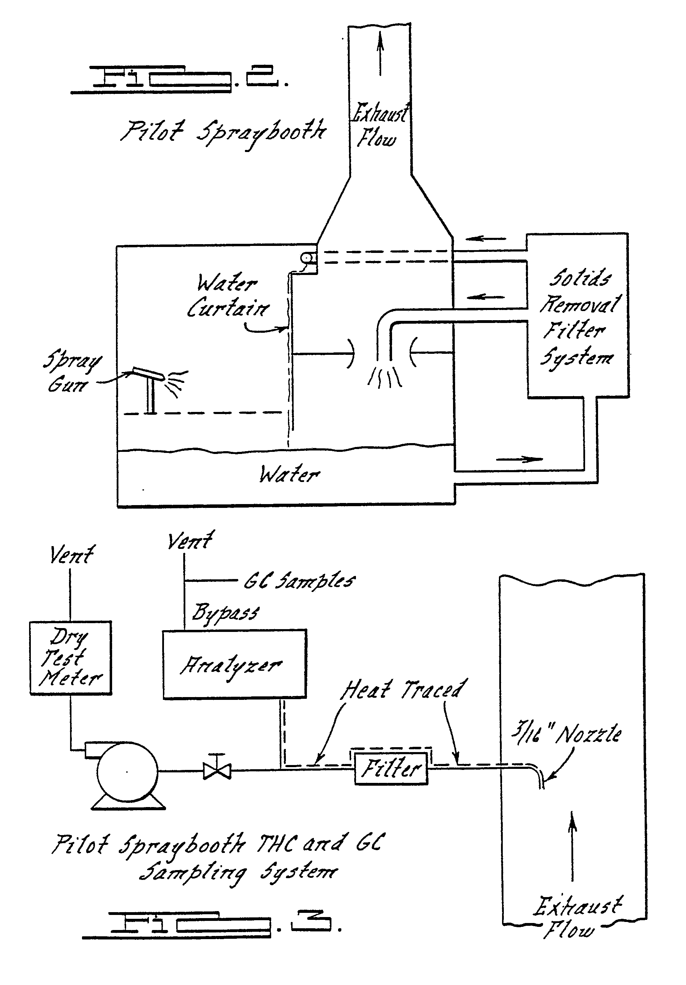

There were three pilot plant (AP-PP) trials. The spraybooth in each trial was a five-foot, side-draft spraybooth manufactured by Binks Manufacturing Company; it had a H.R. Black Company Model PDSB paint sludge filter system. Schematic representation of the spraybooth test assembly appears in Figure 2; operating parameters for each trial appear in Table 1.

Operation in accordance with manufacturer's specifications suggested that the back section had a 3 grain efficiency during the first two trials and a 5 grain efficiency during the last trial.

Table 2 shows solvent composition and physical properties of sprayable coating compositions used in the three trials. Trial 1 examined high solids enamel 3760; Trial 2 examined non-aqueous dispersion enamel 5180; Trial 3 examined high solids enamel 3742.

A Binks Model 61 automatic spraygun equipped with a 63C fluid nozzle and 63PR air cap sprayed paint at a rate in each trial of 0.03 litres of solids per minute per linear meter (0.002 gallons of solids per minute per linear foot) of back section. The spraygun, actuated automatically on a 15 second cycle, operated with open gun times ranging between 2 and 4 seconds in each cycle.

The spraygun nozzle was diagonally five feet from the air inlet of the back section. The spray from the nozzle was in a vertical fan shape and at approximately −45° from horizontal. Mounting the pressure pot of the spraygun on a scale enabled the spray rate to be monitored and controlled.

A Nalco Model V-6 mini-pump metered Nalco 8724 water treatment compound continuously into the spraybooth water; metering was proportional to paint spray rate. A Great Lakes Instruments, Inc. (GLI) Model A605421A pH monitor/controller used with a GLI Model P60L-4-1 submergible pH probe and a Nalco Model V6 mini-pump controlled booth water pH automatically by addition of Nalco 2 or Nalco 8735 water treatment compounds. Addition of Nalco 71-D6 defoaming compounds as required and in 80 ml aliquots controlled foam in the first two trials; a FMI Model RP-6400 pump continuously metered the 71-D6 into the booth water in the last trial. Other spraying conditions and chemical addition rates appear in Table 3.

2. Sampling and analysis

(a) Air emissions—total hydrocarbon analysis

A Beckman Model 402 Total Hydrocarbon (THC) Analyzer continuously monitored stack emissions. An Omniscribe Model B5217-5 two-channel recorder simultaneously displayed instantaneous and electronically integrated (over ten, 15 second spray periods) output from the analyzer.

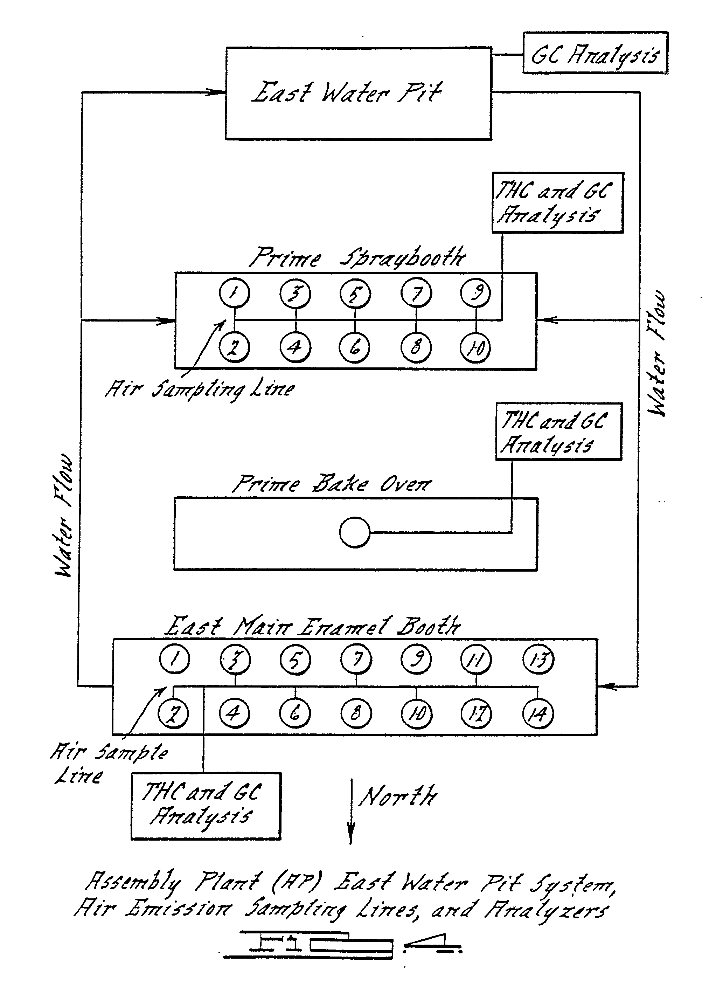

The THC analyzer was zeroed with Ultra Zero Air (Air Monitoring, Inc.) and spanned with 80 and 204 ppm propane-in-air standards (±1% accuracy, Accublend, Scott Research Company) approximately every five hours. Samples of stack emissions passed anisokinetically through a twelve foot stainless steel line to the analyzer during the first trial. Heat tracing occurred over all but a two-foot, in-stack section of this sample line. In the other trials, the system shown in Figure 3 isokinetically sampled stack emissions.

(b) Air emissions—gas chromatographic (GC) analysis

GC analyses determined emission rates of specific solvents. Dupont Model 4000 constant flow, personnel sampling pumps collected known volumes of air emissions directly from the spraybooth exhaust stack onto traps containing Tenax GC polymer. Selection of sampling times averaged rapid temporal changes in stack emission levels. The inlet of a Hewlett Packard Model 5711A Gas Chromatograph equipped with a flame ionization detector (FID) received heat desorbed samples from the traps.

In other trials, samples came from the sample bypass stream of the Beckman 402 THC Analyzer. Sampling occurred approximately every two hours in these trials. (A Hewlett Packard 3385A integration system) reduced the 5711A data in all trials.

(c) Spraybooth water—GC analysis

A Perkin Elmer Sigma 1 GC system equipped with a flame ionization detector (FID) measured uptake of specific solvents into the spraybooth water. Collection of booth water grab samples occurred every ninety minutes in 25 ml headspace-free vials fitted with teflon lined caps. After centifugation to remove suspended solids, there was direct aqueous injection into the Sigma GC.

(d) Paint sludge—GC analysis

A Hewlett Packard 5720 Gas Chromatograph equipped with a Unacon Model 780 sample introduction system and a Hewlett Packard Model 3380S integrator analyzed sludge samples. Airtight containers stored frozen grab samples of floating and sunken sludge.

(e) Air, water, sludge—GC—mass spectrometric analysis (GM-MS)

A Hewlett Packard 5992B GC-MS system provided qualitative confirmation of solvent identity of spraybooth water, sludge and air emissions. Sampling techniques were identical to those in GC analysis.

(f) Flow measurements

Spraybooth exhaust flow measurements were in accordance with Ford Manufacturing Standards BAX-2 procedures.

3. Results pilot trials

(a) Booth water capture

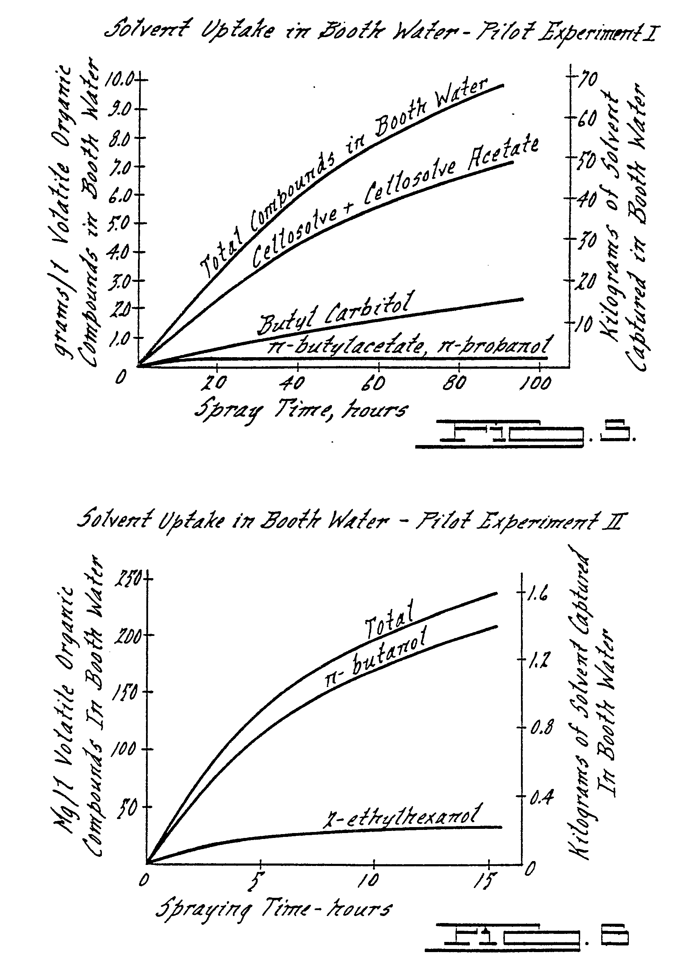

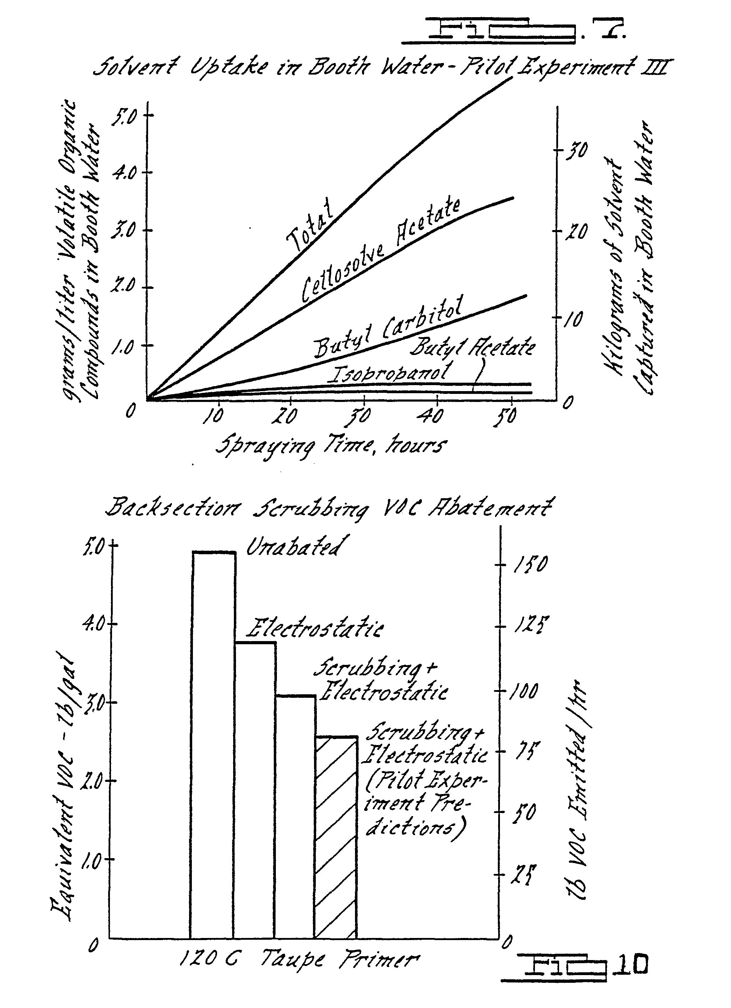

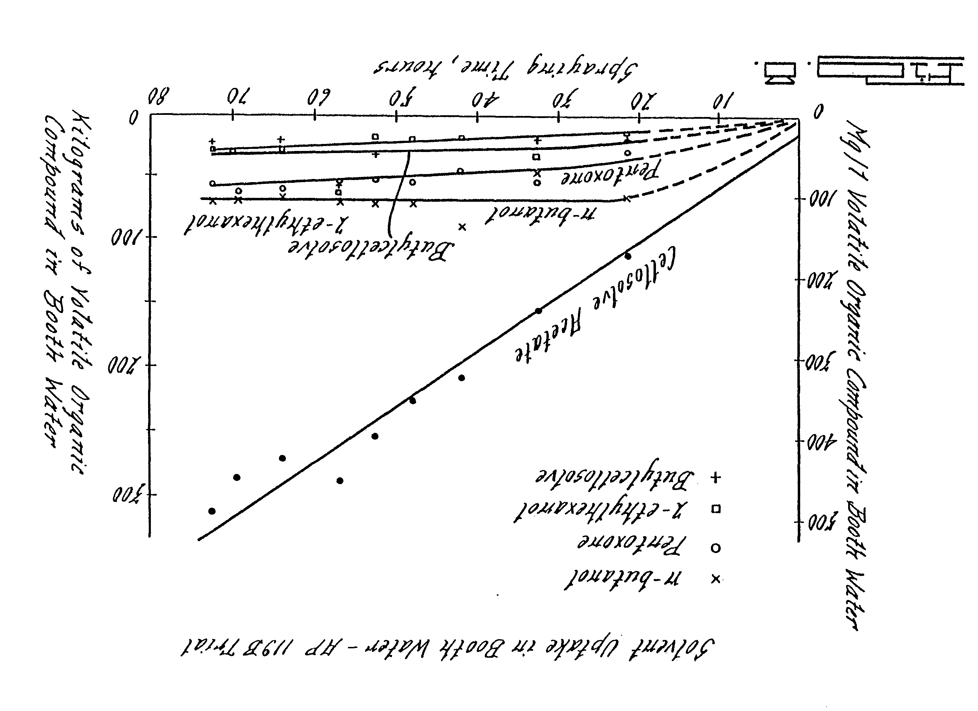

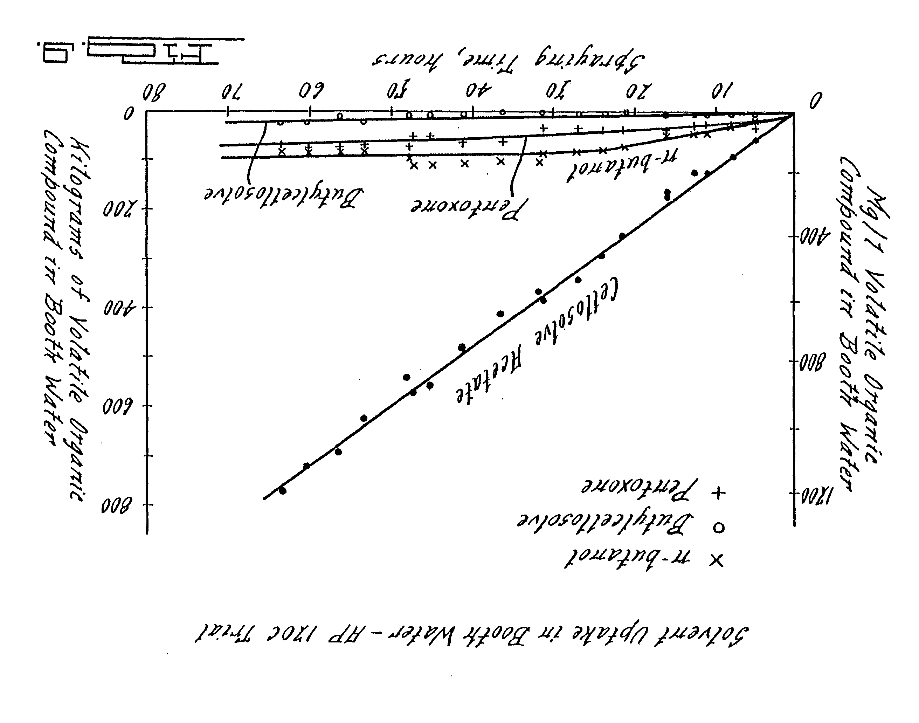

Figures 5, 6 and 7 illustrate an increase in the amount of solvent compounds in booth water as a function of paint spraying time for pilot trials I, II and III, respectively. Non-polar compounds like xylene and esposol 260 did not appear appreciably in the booth water.

Figures 5, 6 and 7 express cellosolve acetate by combining cellosolve acetate and its hydrolysis product cellosolve.

(b) Air emissions

Tables 8, 9 and 10 show solvent concentration (corrected to 7448 Pa (760 mm Hg), 20°C) at

5

selected times during each of the three pilot trials. In these tables, the weight per unit volume solvent concentrations are also recalculated as their equivalent total hydrocarbon concentration in terms of propane. These totals are compared to actual THC concentrations measured by the Beckman 402 Analyzer. The calculations used carbon number response factors derived from the literature or from empirical results.

(c) Sludge characteristics and solvent composition

Tables 11, 12 and 13 show results of analysis of bottom and floating sludges taken during Trials I, II and III, respectively.

(d) Solvent material balance

Tables 14, 15 and 16 present material balances for several sampling periods during Pilot Trials I, II and III, respectively. For each sampling period, solvent spray rate versus solvent emission and capture rate is presented. The materials balances range between 81 and 102 percent.

An assumption for the calculations in Tables 14, 15 and 16 is that the sludge had a composition as presented in Tables 11, 12 and 13, respectively. The sludge production rate was estimated from weight solids of each original paint since all the paint solids sprayed during the pilot trials entered the back section.

(e) Efficiency—pilot trials

At operation of the back section at 1220 Pa (4.9 inches) pressure drop (3-grain (194 mg) particulate scrubbing efficiency), there was removal by cellosolve acetate at 80% efficiency. At operation of the back section at 647 Pa (2.6 inches) pressure drop (5-grain (324 mg) efficiency), there was removal of cellosolve acetate at 55% efficiency. Table 7 shows cumulative scrubbing efficiencies for cellosolve acetate and butyl carbitol over selected spray periods.

B. Production trials
1. Facility and trial description

The production trials were under conditions of commercial spray painting of automobiles in an automotive assembly plant (AP). During the production trials, approximately 62 vehicles per hour received prime and top coats. Figure 4 shows schematically pertinent portions of spraybooth, water line and stack arrangement of the AP painting process.

In the AP coating operation, electrocoated vehicle bodies passed sequentially through a Prime Spraybooth, a Prime Bake Oven, a West Main Enamel Booth, an East Main Enamel Booth, a Main Enamel Bake Oven, and, if required, a Tutone-Repair Spray Booth and Bake Oven.

In a west end of the Prime Spraybooth, modified Behr-Ransbury equipment electrostatically sprayed approximately 50% of a taupe primer. Stacks 9 and 10 (Figure 4) exhaust the west end.

Manual spray equipment thereafter sprayed gray primer around vehicle door jambs and rocker panel areas. The manual spray equipment sprayed the remaining amount of taupe primer. A total of 10 stacks and fans exhausted the Prime Spraybooth.

The vehicles then exited the Prime Spraybooth and entered the Prime Bake Oven. The residence time in the Prime Bake Oven was about 21 minutes. A single stack exhausted the Prime Bake Oven.

Vehicles next entered the West Main Enamel Booth. Behr-Este equipment and four spraypersons sprayed, respectively, electrostatically and manually, topcoat in the West Main Enamel Booth.

Vehicles then entered the adjoining East Main Enamel Booth. Ten to twelve spraypersons sprayed remaining exterior and interior topcoats in the East Main Enamel Booth. Fourteen stacks and fans exhausted the East Main Enamel Booth.

Stack exhaust flows for the Prime Spraybooth, the Prime Bake Oven, and the East Main enamel Booth appear in Table 4.

Although the East and West Enamel Booths adjoined one another, their back sections received water from different storage pits. A west water pit supplied scrubbing water to the West Main Enamel and Tutone and Repair Booth back sections; an east water pit supplied scrubbing water to the Prime Spraybooth and East Main Enamel Booth back sections.

The production trials concerned particularly taupe primer 119C and primer 120C sprayed in the Prime Spraybooth. As can be seen from the above, noted arrangement of the AP, however, the Prime Spraybooth back section could not be isolated from activity in the East Main Enamel Booth because their back sections shared water of the east water pit. To obtain a material balance, therefore, with respect to specific solvents, it was necessary to determine the amount of each solvent sprayed in the East Main Enamel and Prime Spraybooths and to analyze simultaneously the exhaust air from the Prime Spraybooth and Prime Oven Stacks, the East Main Enamel Booth stacks and water of the east water pit.

(It is recognized, however, that the material balance as above noted, omits certain other factors that were not adequately quantified. For example, vehicles entering the East Main Enamel Booth from the adjoining West Main Enamel Booth offgassed into the back section of the East Main Enamel Booth. Thus, solvent sprayed in the West Main Enamel Booth contaminated water of the east water pit.

Contamination would be expected to be less significant in the 120C trial because relatively less cellosolve acetate was sprayed in the West Main Enamel Booth during the 120C trial. Secondly, a phenomenum which may be referred to as "crosstalk" occurred between spraybooths, back sections and pits. The Prime Spraybooth stacks, for example, exhausted n-butyl acetate and butyl cellosolve even though these solvents arose from spraying in the East Main Enamel Booth. Other exogeneous factors that affected efficiency in material balances included: apparent malfunction of scrubbing equipment in certain back sections; cleaning/purge compositions containing solvent and utilized in the booths during the trials).

The east water pit held 170,000±5000 gallons (642600±18900 litres) during the two production trials. At the beginning of each trial, the water showed essential freedom of solvent. The retention time of water in the east water pit was about 10 minutes. Metering of Nalco 8724 to the water was at a rate of about 1.5 gallons per hour. The water had a basic pH which was in a range between 10—10.5 through most of the trials. A combination of manual and constant metered additions of caustic (50%) maintained the pH.

The first trial examined emission from taupe primer 119B; the trial lasted two days. The second trial examined primer 120C; it lasted four days.

In the first trial, several one-hour volume delivery measurements at the paint mixing pots in the paint kitchen determined primer usage. Hourly production data on vehicle color and enamel use per vehicle information developed empirically during the second trial determined enamel usage in the East Main Enamel Booth. Volume measurements made at the paint mixing pots in the paint kitchen provided paint usage in the second trial after subtraction of enamel usage in the West Main Enamel and Tutone-Repair Booths. Industrial engineering open-gun time, fluid delivery rate, and spraygun information provided proportions delivered to each Booth. The analysis suggested 65±10% of the enamel from the paint kitchen went to the West Main Enamel Booth, 10±1.5% went to the Tutone-Repair Booth, and 25±4% went to the East Main Enamel Booth.

Table 5 shows the cellosolve acetate concentration of the 119B and 120C coatings and enamels sprayed in the East Main Enamel Booth along with the volume of each coating sprayed daily.

## 2. Sampling and analytical techniques

### (a) Air emissions—total hydrocarbon analysis (THC)

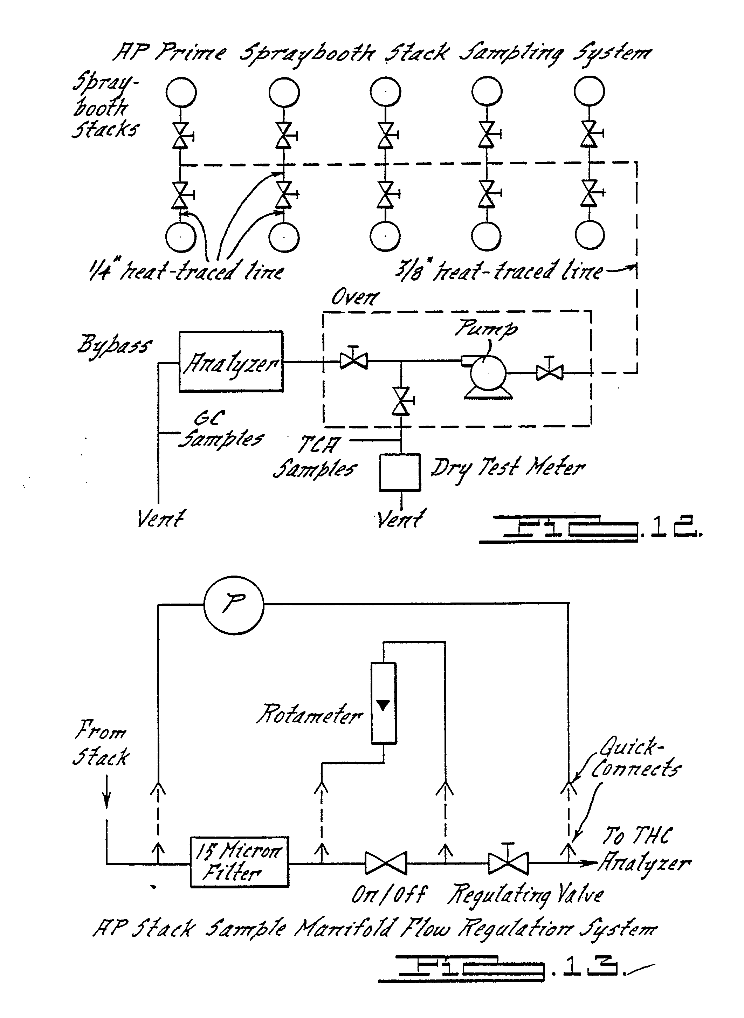

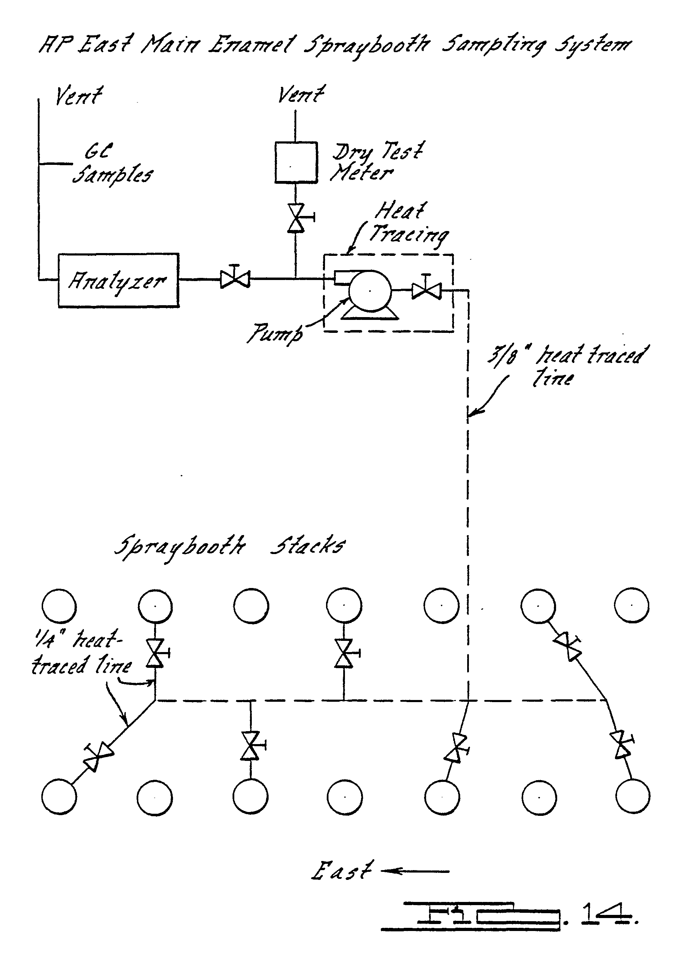

Three Beckman THC Analyzer Systems monitored continuously (eight hours a day in the first trial, sixteen hours a day in the second trial) volatile stack emissions from the Prime Spraybooth, the Prime Bake Oven and the East Main Enamel Spraybooth. A heat-traced manifold system provided an average sample from all 10 stacks on the Prime Spraybooth to a Beckman Model 402 THC Analyzer. A second, heat-traced manifold system provided an average sample from seven of the fourteen East Main Enamel Spraybooth stacks to a Beckman 400 THC Analyzer. Total hydrocarbon measurements made on all 14 enamel booth stacks determined that the emission rate from the seven stacks monitored during the trial was equivalent to the seven not monitored. In both of these stack systems, the fraction of the total THC analyzer flow taken from each particular stack was proportioned to each stacks contribution to the total booth exhaust flow. A second Beckman 402 THC Analyzer monitored exhaust emissions from the single stack on the Prime Bake Oven. Figure 11 illustrates sampling locations on the exhaust stacks of each system.

### (b) Air emissions—gas chromatographic analysis

GC determined the emission rates of specific solvents in stack emissions from the Prime Spraybooth, the Prime Bake Oven and the East Main Enamel Booth. Dupont Model 4000 constant flow personnel sampling pumps collected known volumes of hydrocarbon vapor onto traps containing Tenax GC polymer. Samples came from the FID bypass streams on the three THC Analyzers used to monitor the Prime Booth, Prime Bake Oven, and East Main Enamel Stack Systems. Sampling frequency, flow, time and gas chromatograpic system used for analyzing samples appear in Table 6.

The Hewlett Packard Model 5711A gas chromatograph was the same instrument used in the pilot plant trials except that a Perkin Elmer Sigma 1 Data System reduced the data.

A Hewlett Packard Model 5720 gas chromatograph equipped with a Unacon Model 780 Sample Introduction System and a Hewlett Packard Model 33805 Integrator analyzed certain Prime Bake Oven and East Main Enamel Booth emissions.

### (c) Air emissions—sampling location and technique at prime, enamel and bake stacks

A heat-traced stainless steel manifold systm provided an average emission sample from the ten prime spraybooth stacks. Figure 11 illustrates sampling point on each stack. As illustrated in Figure 12, 6.3 mm (1/4") i.d. sections of line (Technical Heaters, Inc. Model 500-1/4) linked each stack to a central 9.5 mm (3/8") i.d. trunk line (Technical Heaters, Inc. Model 500-3/8) leading to the Beckman 402 THC analyzer. A Technical Heaters, Inc. Model 10450 Temperature Controller maintained the 6.3 mm (1/4") sample lines at approximately 149°C (300°F) and the 9.5 mm (3/8") lines at approximately 110°C (230°F). A Nupro SS-4MG metering valve protected by a Nupro SS-4F-T7 15 $\mu$m sintered-metal filter and located at the connecting point between the 6.3 mm (1/4") and 9.5 mm (3/8") lines regulated the

7

flow from each stack (Figure 13). Closure of an in-line toggle valve to bypass the flow through a Matheson Model 603 rotameter accomplished flow monitoring. The same rotameter, equipped with Swagelok Quick-Connect Connectors, permitted balance of the flow from each stack on the system. Sample flow from each stack was between 0.5 and 1.0 l/min.

A Metal Bellows Model 302HT pump provided sample flow. An Associated Testing Laboratories, Inc. Model BP-1102 oven maintained pump temperature at 140°C (285°F) to prevent sample condensation. The effluent from the pump was split. Approximately 1.9 l/min of flow went to the THC analyzer and the remaining flow vented through a S-110 dry test meter. The Beckman 402 THC Analyzer was modified so that flow from the glass fiber filter bypassed the internal metal bellows pump and went directly to the FID capillary-splitter.

The THC analyzer was zeroed with Ultra Zero Air (Air Monitoring, Inc.) and spanned with an 80 ppm propane-in-air standard approximately every four hours. An additional two-point calibration was performed daily with 80 and 204 ppm propane-in-air standards ($\pm$1% accuracy, Scott Research Co.). The output from the THC analyzer was recorded directly and was also electronically integrated over periods of 10.0 minutes. An Omniscribe Model B5217—5 two-pen recorder recorded both outputs continuously.

A heat-traced stainless manifold system provided on average emission sample GC and THC analysis from seven of the fourteen East Main Enamel Spraybooth stacks (Figure 14). The sampling point on each stack is illustrated in Figure 11. The heat-traced sample lines and the associated temperature and flow control equipment used on the East Main Enamel Booth were identical to the equipment used on the Prime Spraybooth (Figure 12, 13). A Metal Bellows Model 158HT pump provided sample flow. Heat tracing of the pump head and the sample lines leading to the FID detector on the Beckman 400 THC Analyzer prevented sample condensation. Effluent from the pumps was split. Approximately 2.2 l/min of flow went to the THC analyzer and the remaining flow vented through a Rockwell Model S-110 dry test meter (Figure 14).

The Beckman 400 THC Analyzer was zeroed with Ultra Zero Air (Air Monitoring, Inc.) and spanned with 204 ppm propane-in-air standard approximately every four hours ($\pm$1% accuracy, Scott Research Co.). An Omniscribe Model B5118—4 strip chart recorder recorded continuously the output from the THC analyzer.

Prime bake oven

A Beckman 402 THC Analyzer monitored emissions from the single stack on the Prime Bake Oven. Samples of the emissions passed through an eleven foot heat-traced line supplied with the THC analyzer. The instrument was zeroed with Ultra Zero Air (Air Monitoring Inc.) and spanned with 204 ppm propane-in-air standard ($\pm$1% accuracy, Scott Research Co.) approximately every four hours. A Weather Measure Model EPR-200A strip chart recorder recorded continuously the output from the THC analyzer.

(d) Spraybooth water—gas chromatographic analysis

A Perkin Elmer Sigma 1 Gas Chromatographic System measured solvents in the water of the East Pit System. Booth water grab samples occurred approximately every 2.5 hours in 25 ml headspace-free vials fitted with teflon-lined caps. The GC received the samples (after centrifugation to remove suspended solids) by direct aqueous injection.

(e) Paint sludge—gas chromatographic analysis

Grab samples of floating and sunken paint sludge occurred during each AP trial from the East Water Pit System. The sludge was a mixture of taupe and gray primer and enamel overspray. Measurement and equipment was identical to that described in A 2.d.

(f) Air and water—GC—MS analysis

A Hewlett Packard 5992B GC-MS System analyzed the Prime Spraybooth, Prime Bake Oven, East Main Enamel Stack Emissions, and East Pit System Water prior to the trials.

(g) Flow measurements

Personnel made spraybooth and oven exhaust flow measurements in accordance to the Ford Motor Company Manufacturing BAX-2 procedure. Prime spraybooth and oven flows measurements occurred during five of the six trial days. East Enamel stack flows were cross-checked at the beginning of the first trial and assumed to be constant during the remainder of both AP experiments. Figure 11 illustrates the stack flow measuring points.

3. Results—production trial
(a) Solvent capture in water

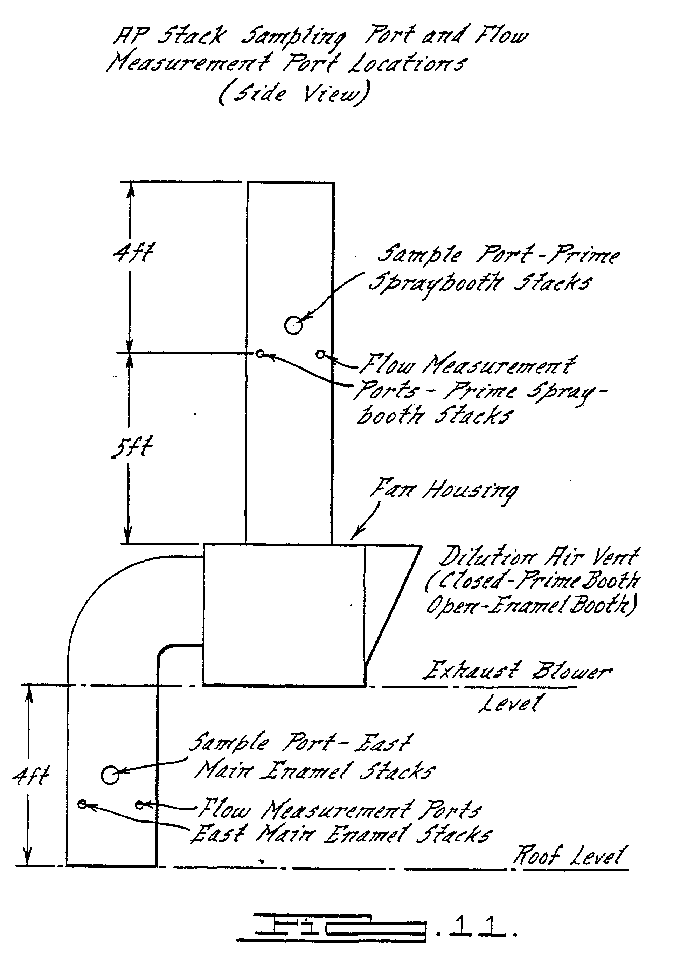

Figures 8 and 9 illustrate uptake of specific solvents into the water of the AP East. Pit-System during the 119B and the 120C taupe primer trials as a function of paint spraying time. Figures 8 and 9 express results as increasing booth water concentration and as mass of solvent captured. Least squares regression analysis gave cellosolve acetate accumulation in the booth water at a rate of 4.5±0.3 kg/hr of spraytime during the 119B trial and at 11.9±0.2 kg/hr during the 120C trial.

The solvent pentoxane accumulated in the booth water during both trials. It was a constituent of a cleaning/purge solvent blend and not contained in any primer or enamel solvent package.

(b) Solvent air emissions

Table 17 and Tables 18, 19 and 20 show daily average stack emission rate for specific solvents from the Prime Spraybooth, the Prime Bake Oven, and the East Main Enamel Spraybooth during the 119B and 120C trials, respectively.

The tables express emission rates in terms of kilograms of solvent emitted per hour of paint spraying time (corrected to 20°C, 7445 Pa (29.9″ Hg. Calculations account for daily differences in stack flows (Table 4).

The tables express average concentration of each solvent in milligrams per cubic meter (standard conditions: 7445 Pa (29.9″ Hg), 20°C); and the total concentration is reexpressed in terms of propane ($C_3H_8$) and compared to the daily average THC concentrations measured at each source with either a Beckman 400 or 402 Analyzer. The difference between the measured and calculated THC concentrations for the Prime and Enamel Spraybooths seldom exceeded 10 percent. Fluctuations in the measured THC values through each day, however, frequently exceeded this level.

Measurements in the Prime Spraybooth showed a highly variable methane background ranging from 9 to 90 ppm as $C_3H_8$. A comparison between the calculated and measured THC values for the bake oven (Table 19) is inappropriate because of such a variability.

(c) Sludge solvent composition

Essentially two solvents, cellosolve acetate and xylene, appeared in samples of bottom and floating sludge. The amount of xylene was between 2.5 and 12.5 weight percent of dry sludge; the amount of cellosolve acetate ranged between 0.8 and 2.0 weight percent.

(d) Scrubbing efficiency—material balance

Table 21 shows material balances on the cellosolve acetate sprayed in the East Pit Water System during the 119B and 120C trials. The material balance compares the sum of emission rates from the Prime Spraybooth, Prime Bake Oven and the East Main Enamel Spraybooth plus the rate of cellosolve acetate captured in the booth water (absent sludge) to the rate at which cellosolve acetate was sprayed in the Prime and East Main Enamel Spraybooth.

The percentage of cellosolve acetate captured in the spraybooth water was 28±5% and 29±5% of the total sprayed in the 119B and 120C trials, respectively. Efficiency appears closer to 32±6% when considering the amount of cellosolve acetate in the sludge and the minor amounts of solvent other than cellosolve acetate captured in the spraybooth water. This capture efficiency translates into a 5% reduction in VOC for the 119B coating and a 19% reduction in VOC for the 120C coating.

Table 22 compares Prime Spraybooth stack volatile organic compound emission rate to spray rate. An efficiency in the first trial can not be based on this data because the emission rate exceeds the spray rate. An efficiency in the second trial (emitted over sprayed) is 13%. Error analysis, however, suggests the latter result neither proves nor disproves reduction of emissions because errors in the measurements involved in the material balance were ±22%.

(e) Comparison to water base coatings

Figure 10 gives an example of how backsection scrubbing abatement might be used, in part, to reduce the equivalent emissions (VOC) of a 120C solvent based primer and assuming abatement by the various techniques is additive. This solvent based primer applied unabated using non-electrostatic spray equipment, has a VOC of 0.48 kg/l (4.8 lb/gal). By applying this primer using electrostatic application, and assuming an increase in system transfer efficiency, say from 50 to 65%, could in effect lower the equivalent VOC of this material to approximately 0.37 kg/l (3.7 lb/gal). Utilizing backsection scrubbing abatement of 19% could lower the equivalent VOC of this primer, applied electrostatically, even further, say down to about 0.3 kg/l (3.0 lbs/gal). Furthermore, if the solvent had been scrubbed even more effectively, as i.e. 32%, as observed in pilot trials, the VOC emissions could possibly be reduced even as low as 0.25 kg/l (2.5 lbs/gal).

C. Sparging

I. Circulation of solvent laden water (having approximately 3.5 grams/liter cellosolve and cellosolve acetate) through the back section of the Pilot Spraybooth at the conclusion of Pilot Trial III was for 48 hours. Booth exhaust air and back section water flows were 141 m³/minute (5000 CFM) and 661 l/min (175 GPM), respectively. Butyl carbitol and cellosolve did not change significantly in amount at the end of 48 hours but cellosolve acetate had a reduction by 50%. Light alcohols and ketones left the water in about 6 hours.

D. Circulation of the East Water Pit water for 24 hours at the conclusion of the 120C production trial caused a 5% by weight reduction of cellosolve in the pit water. The Prime Spraybooth and East

**0 026 781**

Main Enamel Booths ran continuously during the 24 hours. Because the pit water was at a pH between 10—10.5, cellosolve acetate hydrolyzed to cellosolve.

E. Following general procedures outlined in A (Pilot Trials) above, except that there is spray of a different sprayable coating composition and a booth water pH of 10.5, resulted in an efficiency of 90% with respect to capture of cellosolve acetate in a 5 grain back section.

Water treatment compounds
Nalco 8735 and 8724 have the following characteristics:

| | 8724 | 8735 |
|---|---|---|
| Specific gravity, (60/60F) | 1.518 | 1.327 |
| Organic agents | None | None |
| Water content, % by weight | 68 | 15 |
| Pour point, % | | —25 60 |
| pH, (as received) | 13.72 | — |
| Solid content, % by weight | 57.2 | 64.2 |
| | | |
| Spectrographic analysis of solids, % | | |
| Sodium as Na | Major | Major |
| Potassium as K | Major | 2.0 |
| Silicon as $SiO_2$ | 0.1 | 13.0 |
| Aluminum as $Al_2O_3$ | 0.02 | 3.3 |
| Calcium as CaO | — | 0.2 |
| Lead as Pb | — | 0.02 |

Infrared analysis:
Spectrograms of #8735 are characteristic of Sodium Carbonates.
Spectrograms of #8724 are characteristic of Carbonates.

| | 8724 | 8735 |
|---|---|---|
| Foam characteristics | No foam | |
| Extractable oil, % by weight | — | 19.5 |
| | | |
| Polyvalent metal salts, mls | 8724 | |
| % by weight | 1 | |
| Specific gravity, (60/60F) | 9.0 | |
| Flash point, (C.O.C.) | 1.174 | |
| | (None to boiling) | |
| Pour point, °F (°C) | —27 (—32) | |
| Solubility in water (50:50) | Complete | |
| pH, (as received) | 0.65 | |
| Water content, % by weight | 70 | |
| Odor | Not objectionable | |
| Solid content, % by weight | 28.3 | |
| Surface tension, dynes/cm | 44.4 | |
| Viscosity @ 74 F cSt | 8.31 | |
| | | |
| Spectrographic analysis, % | | |
| Sodium as Na | 0.40 | |
| Potassium as K | less than 0.05 | |
| Silicon as $SiO_2$ | 0.10 | |
| Aluminum as $Al_2O_3$ | 31.0 | |
| Calcium as CaO | 0.20 | |
| Lead as Pb | — | |

Also, 8724 compound is believed to be 10% by weight of polyamine synthesized from the following materials:

1. 0.42% diethylene glycol
2. 0.58% polyethylene oxide
3. 1.08% ethylene oxide
4. 0.75% epichlorohydrin
5. 2.04% HMDA
6. 0.02% 1.11 -dichlorobutane-2

10

## 0 026 781

### TABLE 1
#### Pilot spraybooth operating parameters

| Parameter | Pilot trial number | | |
|---|---|---|---|
| | I | II | III |
| Backsection particulate scrubbing efficiency, grams/1000 SCFM | 3 | 3 | 3 |
| Stack exhaust flow, SCFM | 4800±5% | 4800±5% | 4900±5% |
| Backsection water nozzle flow, gal/min (l/min) | ~150 (567) | ~150 (567) | ~150 (567) |
| Backsection water nozzle pressure, psi (kPa) | 4.0 (27.6) | 4.0 (27.6) | 4.0 (26.6) |
| Backsection water nozzle type, turns | 3 | 3 | 5 |
| Backsection venturi diameter, inches (cm) | 14 (35.6) | 14 (35.6) | 17 (43.2) |
| Backsection static pressure, inches $H_2O$ (Pa) | 4.9 (1220) | 4.9 (1220) | 2.6 (647) |
| Backsection front water curtain flow, gal/min (l/sec) | ~50 (3.78) | ~50 (3.78) | ~50 (3.78) |
| Booth system volume | 1800 | 1800 | 1800 |

### TABLE 2
#### Paint solvent composition and paint physical properties

| Physical property | Paint system | | |
|---|---|---|---|
| % Wt. solids | 65.5 | 45.2 | 63.4 |
| Density (lb/gal) (kg/m³) | 10.2 (1018) | 9.0 (898) | 10.25 (1023) |
| V.O.C. (calculated lb/gal (kg/m³)) | 3.52 (351) | 4.93 (492) | 3.84 (383) |
| Viscosity (#4 F.C.) | 34" | 35" | 32 |

| Solvent | Weight percent of total solvent | | |
|---|---|---|---|
| Cellosolve acetate | 49.9 | 5.2 | 48.1 |
| Butyl carbitol | 15.5 | 9.1 | 13.6 |
| Isoproponol | 17.9 | 14.6 | 16.3 |
| Heptane | 3.2 | — | 4.3 |
| Naptha | 1.4 | 8.0 | — |
| N–butyl acetate | 0.7 | — | — |
| Isobutanol | 10.6 | 11.1 | 9.7 |
| Xylenes | traces | — | — |
| Methylamyketone | — | 47.8 | 0.2 |
| Methylethylketone | — | 3.6 | 3.5 |
| Esposol 260 F | — | — | 4.3 |
| VM+P Naptha | — | —. | — |
| Toluene | — | — | — |
| N–Butanol | — | — | — |
| 2-ethylhexanol | — | — | — |
| TRIAL | I | II | III |

TABLE 3
Paint spraying conditions and boothwater chemical addivites rates

| | Parameter | Pilot trial | | |
| | | I | II | III |
|---|---|---|---|---|
| 1. | Paint tested | 3760 | 518 | 3722 |
| 2. | Length of trial spraying time, hours | 92 | 15 | 51 |
| 3. | Spraying time/day, hours | 5 | 5 | 20 |
| 4. | Paint solids delivery rate, gal/min linear foot of booth (litres/min · linear meter) | 0.002 (0.025) | 0.002 (0.025) | 0.002 (0.025) |
| 5. | Paint spray rate, gal/min (l/min) | 0.0176 (0.066) | 0.0345 (0.130) | 0.0183 (0.069) |
| 6. | Spraygun fluid delivery rate, fl.oz./min (ml/min) | 14 (398) | 26 (738) | 14 (398) |
| 7. | Open gun time on 15 sec cycle, seconds | 2.4 | 2.6 | 2.5 |
| 8. | Spraygun atomization pressure psi (kPa) | 70 (482) | 70 (482) | 70 (482) |
| 9. | Paint pot pressure approximate, psi (kPa) | 70 (482) | 20 (137) | 40 (275) |
| 10. | Nalco 8724 addition rate, % by volume of paint sprayrate | 6 | 3.1 | 6 |
| 11. | Nalco 2 addition rate (approx.) ml/min | 7 | 7 | — |
| 12. | Nalco 8735 addition rate (approx.) ml/min | — | — | 2 |
| 13. | Nalco 71-DS defoamer addition rate, ml/min | ~2 | ~2 | 1.0 |

TABLE 4
AP Stack exhaust flows

| | Flow, SCFM (m³/min) | | |
| TRIAL I | Prime spraybooth | Prime bake oven | East main enamel spraybooth |
|---|---|---|---|
| DAY 1 | 171,900 (4813) | 16,240 (455) | 204,300 (572) |
| DAY 2 | 171,900 (4813) | 16,240 (455) | 204,300 (572) |
| TRIAL II | | | |
| DAY 1 | 174,800 (4894) | 14,900 (417) | 204,300 (572) |
| DAY 2 | 169,300 (4740) | 15,620 (437) | 204,300 (572) |
| DAY 3 | 183,300 (5132) | 15,800 (442) | 204,300 (572) |
| DAY 4 | 161,500 (4522) | 16,800 (470) | 204,300 (572) |

<div style="text-align:center">

TABLE 5

East pit system daily paint usage and cellosolve acetate (CA) content

</div>

| Paint | Grams CA per gal reduced paint (g/l) | M6J119B Trial* 6/21 gal paint | M6J119B Trial* 6/22 gal paint | Total Kg CA | M6J120C Trial 7/2 gal paint (litres) | M6J120C Trial 7/3 gal paint (litres) | M6J120C Trial 7/5 gal paint (litres) | M6J120C Trial 7/6 gal paint (litres) | Total Kg CA |
|---|---|---|---|---|---|---|---|---|---|
| 1 | 407 (107) | 42 (158) | 46 | 35.8 | 26 (98) | 33 (125) | 14 (53) | 8 (30) | 33.0 |
| 2 | 103 (27) | 3 (11.4) | 4 | 0.7 | 1 (3.8) | 4 (15) | 0 | 1 (3.8) | 0.6 |
| 3 | 302 (80) | 35 (132) | 19 | 16.3 | 63 (238) | 52 (196) | 52 (196) | 55 (208) | 67.0 |
| 4 | 69 (18) | — | — | — | 27 (102) | 25 (94) | 32 (121) | 46 (174) | 9.0 |
| 5 | 177 (47) | 4 (15) | 3 | 1.2 | 1 (3.8) | 6 (23) | 1 (3.8) | 1 (3.8) | 1.7 |
| 6 | 362 (95) | 15 (57) | 15 | 10.8 | 32 (121) | 30 (113) | 30 (113) | 27 (102) | 43.2 |
| 7 | 161 (43) | 10 (38) | 13 | 3.7 | 19 (72) | 31 (117) | 33 (125) | 35 (132) | 19.0 |
| 8 | 143 (39) | 42 (159) | 32 | 10.6 | 68 (257) | 58 (219) | 80 (302) | 76 (287) | 40.3 |
| 9 | 169 (45) | 8 (30) | 17 | 4.3 | 43 (162) | 30 (113) | 35 (132) | 22 (83) | 22.0 |
| 10 | 89 (24) | 3 (11.4) | 3 | 0.6 | 4 (15) | 1 (3.8) | 1 (3.8) | 1 (3.8) | 0.4 |
| 11 | 77 (20) | 27 (102) | 25 | 4.0 | 34 (128) | 46 (173) | 48 (181) | 48 (181) | 13.5 |
| 12 | 370 (98) | 2 (7.5) | 3 | 1.8 | 3 (11) | 2 (7.5) | 1 (3.8) | 2 (7.5) | 2.9 |
| 13 | 425 (112) | 2 (7.5) | 3 | 2.2 | 2 (7.5) | 2 (7.5) | 2 (7.5) | 2 (7.5) | 3.6 |
| 14 | 127 (34) | 9 (34) | 10 | 2.4 | 41 (155) | 39 (147) | 39 (147) | 28 (106) | 18.8 |
| 15 | 255 (67) | 2 (7.5) | 2 | 1.0 | 2 (7.5) | 1 (3.8) | 1 (3.8) | 0 | 1.1 |
| 16 | 113 (30) | 20 (75) | 33 | 6.0 | 33 (125) | 39 (147) | 36 (136) | 47 (178) | 17.5 |
| 17 | 288 (76) | 2 (7.5) | 2 | 1.2 | 3 (11) | 2 (7.5) | 2 (7.5) | 1 (3.8) | 2.4 |
| 18 (119B) | 268 (71) | 173 (653) | 177 | 93.8 | — | — | — | — | |
| 19 (120C) | 1307 (346) | — | — | — | 351 (1327) | 406 (1534) | 387 (1462) | 479 (1810) | 2120. |
| 20 | 695 (184) | 41 (155) | 41 | 57.3 | 125 (472) | 86 (325) | 78 (295) | 14 (53) | 210.0 |
| Kg CA/day | — | 127 | 127 | 253.7 | 638.6 | 664.8 | 626.9 | 696.9 | 2627. |
| Cars/day | — | 488 | 499 | — | 1012 | 997 | 956 | 1053 | — |

* One shift only

0 026 781

TABLE 6
Stack emission analytical parameters

| Site | Sampling frequency (per shift) | Sampling flow (ml/min) | Sampling time (min) | GC System |
|---|---|---|---|---|
| Prime spraybooth | 3—4 | 21.4 | 20 | HP 5711A |
| Prime bake oven | 1 | 28.8 | 12 | HP 5711A |
| Prime bake oven | 2 | 28.8 | 12 | HP 5720 |
| East main enamel | 1 | 21.3 | 30 | HP 5711A |
| East main enamel | 2—3 | 21.3 | 30 | HP 5720 |

TABLE 7
Cumulative spraybooth scrubbing efficiency for cellosolve acetate and butyl carbitol Pilot trials I and III

| | Percent cumulative scrubbing efficiency* | | | |
|---|---|---|---|---|
| | Pilot Trial I | | Pilot Trial III | |
| Spraying time hours | Cellosolve acetate | Butyl carbitol | Cellosolve acetate | Butyl carbitol |
| 10 | 97 | 81 | 57 | 67 |
| 30 | 94 | 80 | 57 | 82 |
| 50 | 82 | 78 | 54 | 92 |
| 70 | 72 | 73 | — | — |
| 90 | 65 | 66 | — | — |

$$* \text{ Cumulative scrubbing efficiency} = \frac{\text{mass of solvent captured in time, } t}{\text{mass of solvent sprayed in time, } t}$$

14

0 026 781

TABLE 8
Airborne solvent emission THC and GC measurements—pilot trial I

| Spraying time Solvent | 10 Hrs. mg/m³* | ppm (C₃)^Δ | 20 Hrs. Mg/m³ | ppm (C₃) | 40 Hrs. Mg/m³ | ppm (C₃) | 60 Hrs. Mg/m³ | ppm (C₃) | 80 Hrs. Mg/m³ | ppm (C₃) |
|---|---|---|---|---|---|---|---|---|---|---|
| Isopropanol | 10.5 | 3.07 | 16.1 | 5.4 | 20.1 | 6.7 | 19.4 | 6.5 | 20.7 | 7.8 |
| MEK | 1.9 | 0.70 | 2.4 | 0.9 | 3.0 | 1.1 | 3.7 | 1.4 | 9.1 | 2.9 |
| Isobutanol | 9.6 | 1.11 | 19.0 | 6.6 | 2.10 | 7.3 | 17.3 | 6.0 | 22.1 | 8.1 |
| Cellosolve | 0.3 | 1.09 | 1.2 | 0.4 | 1.3 | 0.4 | 3.9 | 1.2 | 6.5 | 1.7 |
| N-butylacetate | 1.3 | 2.01 | 1.7 | 0.6 | 2.1 | 0.8 | 1.9 | 0.7 | 2.1 | 0.8 |
| Heptane | 0.6 | 0.34 | 0.8 | 0.5 | 1.6 | 1.0 | 1.0 | 0.6 | 1.9 | 0.9 |
| Cellosolve acetate | 14.9 | 4.16 | 22.1 | 6.2 | 32.1 | 9.0 | 38.2 | 10.7 | 35.9 | 10.0 |
| Xylenes | 1.5 | 0.93 | 2.1 | 1.4 | 2.5 | 1.6 | 2.4 | 1.5 | 3.9 | 2.0 |
| Butyl carbitol | 0.4 | 0.11 | 0.4 | 0.1 | 0.4 | 0.1 | 0.4 | 0.1 | 0.5 | 0.1 |
| Total (GC analysis) | 41.0 | 13.5 | 65.8 | 22.1 | 84.1 | 28.0 | 88.2 | 28.7 | 10.3 | 34.3 |
| THC analysis** | | 23 | | 32 | | 37 | | 35 | | 41.5 |
| Total GC/THC% | | 59 | | 70 | | 76 | | 82 | | 83 |

\* Milligrams of solvent/standard cubic meter of exhaust air from GC analysis
Δ ppm v/v as C₃H₈ calculated from GC analysis
**Measured with Beckman 402 THC analyzer

TABLE 9
Airborne solvent emission THC and GC measurements—pilot trial II

| Spraying time Solvent | 1.1 Hr. mg/m³* | ppm (C₃)^Δ | 3.2 Hr. mg/m³ | ppm (C₃) | 6.7 Hr. mg/m³ | ppm (C₃) | 11.3 Hr. mg/m³ | ppm (C₃) | 12 Hr. mg/m³ | ppm (C₃) |
|---|---|---|---|---|---|---|---|---|---|---|
| Isobutanol | 0 | 0 | 0 | 0 | 1.8 | 0.7 | 2.1 | 0.7 | 1.7 | 0.6 |
| N-butanol | 10.1 | 3.7 | 14.3 | 5.2 | 19.3 | 7.1 | 21.5 | 7.4 | 22.5 | 7.8 |
| Butyl acetate | 14.3 | 5.4 | 15.4 | 5.7 | 14.9 | 5.6 | 13.9 | 5.2 | 16.5 | 6.2 |
| Tolyene | 9.9 | 6.4 | 9.6 | 6.2 | 9.4 | 6.2 | 10.0 | 6.5 | 10.4 | 6.7 |
| Xylene | 300 | 186 | 311 | 192 | 307 | 190 | 324 | 201 | 333 | 206 |
| Espesol 260 | 79.3 | 47.7 | 75.5 | 45.4 | 76.2 | 45.8 | 79.8 | 48.0 | 81.5 | 49.0 |
| Total (GC analysis) | 414 | 249 | 426 | 255 | 429 | 255 | 451 | 268 | 466 | 276 |
| THC analysis** | | 234 | | 250 | | 252 | | 252 | | 250 |
| Total GC/THC% | | 106 | | 102 | | 101 | | 106 | | 110 |

\* Milligrams of solvent/standard cubic meter of exhaust air from GC analysis
Δ ppm v/v as C₃H₈ calculated from GC analysis
**Measured with Beckman 402 THC analyser

## TABLE 10
### Airborne solvent emission THC and GC measurements—pilot trial III

| Spraying time Solvent | 5 Hr. mg/m³* | ppm (C₃)Δ | 15 Hr. mg/m³ | ppm (C₃) | 25 Hr. mg/m³ | ppm (C₃) | 35 Hr. mg/m³ | ppm (C₃) | 46 Hr. mg/m³ | ppm (C₃) |
|---|---|---|---|---|---|---|---|---|---|---|
| Isopropanol | 15.6 | 5.2 | 21.8 | 7.2 | 28.9 | 9.7 | 26.8 | 9.0 | 26.0 | 8.8 |
| MEK | 12.5 | 4.6 | 7.1 | 2.5 | 12.8 | 4.8 | 7.6 | 2.9 | 7.0 | 2.5 |
| Isobutanol | 12.8 | 4.5 | 17.2 | 6.1 | 25.4 | 8.9 | 23.0 | 7.9 | 20.1 | 6.9 |
| N-butylacetate | 3.8 | 1.4 | 3.8 | 1.4 | 4.2 | 1.4 | 3.6 | 1.3 | 3.3 | 1.3 |
| Neptane | 2.6 | 1.4 | 2.3 | 1.3 | 2.9 | 1.6 | 2.4 | 1.3 | 2.3 | 1.3 |
| Cellosolve acetate | 24.9 | 6.9 | 29.5 | 8.1 | 50.8 | 14.1 | 53.3 | 14.9 | 56.4 | 15.8 |
| Total (GC analysis) | 72.2 | 24.0 | 81.7 | 26.6 | 125. | 40.5 | 117 | 37.3 | 115 | 36.6 |
| THC analysis** | | 32 | | 26.6 | | 48.9 | | 39.5 | | 42 |
| Total GC/THC% | | 75. | | 100. | | 83 | | 94 | | 87 |

\* Milligrams of solvent/standard cubic meter of exhaust air from GC analysis
Δ ppm v/v as $C_3H_8$ calculated from GC analysis
** Measured with Beckman 402 THC analyzer

## TABLE 11
### Sludge solvent analysis—pilot trial I

Solvent composition—weight percent in dry sludge

| Spraying time Hours | Methanol | Isopropanol | Isobutanol | Cellosolve | Cellosolve acetate | Butyl carbitol | WaterΔ |
|---|---|---|---|---|---|---|---|
| 10 | .56 | 0.27 | 0.57 | 0.01 | 0.07 | 0.19 | 25 |
| 50 | 1.7 | 0.93 | 2.2 | 0.15 | 0.10 | 0.83 | 20 |
| 75 | 1.4 | 0.96 | 1.6 | 0.20 | 0.24 | 1.2 | 27 |
| 80* | 1.3 | 0.89 | 1.7 | 0.13 | 0.24 | 1.1 | 23 |
| 90 | 1.2 | 0.82 | 1.4 | 0.15 | 0.26 | 1.0 | — |
| Average | 1.23 | 0.77 | 1.50 | 0.13 | 0.18 | 0.86 | 24 |

Δ Weight percentage of wet sludge as sampled
\* Bottom sludge sample, all other samples were floating sludge

0 026 781

### TABLE 12
Sludge solvent analysis—pilot trial II

| Spraying time Hours | Solvent composition—wt.% of dry sludge | | | |
| --- | --- | --- | --- | --- |
| | N–Butanol | Xylenes | Espesol 260 | Water* |
| 3 | 3.9 | 6.7 | 2.8 | 18 |
| 8 | 4.1 | 7.1 | 3.3 | 17 |
| 12 | 3.4 | 7.8 | 2.4 | 16 |
| Average | 3.8 | 7.2 | 2.8 | 17 |

* Weight percent of wet sludge as sampled

### TABLE 13
Sludge solvent analysis—pilot trial III

| Spraying time Hours | Solvent composition—weight percent of dry sludge | | | | | | |
| --- | --- | --- | --- | --- | --- | --- | --- |
| | Methanol | Isopropanol | Isobutanol | Cellosolve | Cellosolve acetate | Butyl carbitol | Water* |
| 10 | 1.85 | 0.25 | 0.58 | — | 0.41 | 1.04 | 35 |
| 16 | 1.8 | 0.23 | 0.5 | — | 0.50 | 0.90 | 49 |
| 20 | 1.40 | 0.19 | 0.66 | — | 0.23 | 0.48 | 23 |
| 30$^\Delta$ | 1.6 | 0.21 | 0.46 | 0.15 | 0.22 | 0.11 | 57 |
| Average | 1.66 | 0.22 | 0.55 | 0.04 | 0.34 | 0.63 | 41 |

* Weight percent of wet sludge as sampled
$^\Delta$ Bottom sludge sample, all others were floating sludge

TABLE 14
Solvent material balance—pilot trial I

Grams of solvent/hour

| Spraying time Hours | Sprayed | Captured in sludge | Captured in water | Emitted in air | Emitted & captured |
|---|---|---|---|---|---|
| | | | | | Sprayed |
| 10 | 1678 | 55 | 1144 | 325 | 0.91 |
| 20 | 1678 | 55 | 1022 | 543 | 0.97 |
| 40 | 1678 | 190 | 763 | 681 | 0.97 |
| 60 | 1678 | 190 | 586 | 731 | 0.90 |
| 80 | 1678 | 170 | 450 | 892 | 0.90 |

TABLE 15
Solvent material balance—pilot trial II

Grams of solvent/hour

| Spraying time Hours | Sprayed | Captured in sludge | Captured in water | Emitted in air | Emitted & captured |
|---|---|---|---|---|---|
| | | | | | Sprayed |
| 1.1 | 4420 | 520 | 239 | 3440 | 0.95 |
| 3.9 | 4420 | 520 | 144 | 3550 | 0.95 |
| 6.7 | 4420 | 520 | 81 | 3550 | 0.99 |
| 11.3 | 4420 | 520 | 71 | 3770 | 0.99 |
| 12 | 4420 | 520 | 69 | 3860 | 1.01 |

TABLE 16
Solvent material balance—pilot trial III

Grams of solvent/hour

| Spraying time Hours | Sprayed | Captured in sludge | Captured in water | Emitted in air | Emitted & captured |
|---|---|---|---|---|---|
| | | | | | Sprayed |
| 5 | 1910 | 110 | 851 | 589 | 0.81 |
| 15 | 1910 | 110 | 831 | 667 | 0.84 |
| 25 | 1910 | 110 | 818 | 1020 | 1.02 |
| 35 | 1910 | 110 | 770 | 952 | 0.96 |
| 46 | 1910 | 110 | 647 | 940 | 0.89 |

TABLE 17
Daily average spraybooth and bake oven stack emissions—119B trial

| Location | Prime spraybooth | | | | Prime bake oven | | | | Enamel spraybooth | | | |
|---|---|---|---|---|---|---|---|---|---|---|---|---|
| Day | Day 1 | | Day 2 | | Day 1 | | Day 2 | | Day 3 | | Day 4 | |
| Solvent | mg/m³ | Kg/hr | mg/m³ | Kg/hr | mg/m³ | Kg/hr | mg/m³ | Kg/hr | mg/m³ | Kg/hr | mg/m³ | Kg/hr |
| N-Butanol | 20.8 | 6.26 | 20.7 | 6.23 | | | | | 18.2 | 7.21 | 18.0 | 7.15 |
| MIBK | 1.89 | 0.57 | 3.34 | 1.01 | | | | | | | | |
| Isobutylacetate | 21.5 | 6.48 | 19.6 | 5.90 | | | | | | | | |
| N-butylacetate | 6.07 | 1.83 | 7.57 | 2.28 | | | | | 18.0 | 7.15 | 30.7 | 12.2 |
| Toluene | 11.2 | 3.37 | 12.1 | 3.63 | | | | | 13.4 | 5.34 | 16.5 | 6.54 |
| Cellosolve acetate | 26.0 | 7.84 | 26.3 | 7.92 | 3.75 | 1.06 | 4.70 | 1.33 | 11.8 | 4.70 | 13.0 | 5.16 |
| MAK+Xylenes | 48.0 | 14.5 | 48.3 | 14.5 | 15.5 | 0.44 | 20.2 | 0.57 | 157 | 62.4 | 172 | 68.1 |
| Solvesso 150 | 58.9 | 17.7 | 40.2 | 12.1 | 125 | 3.56 | 148 | 4.22 | | | | |
| DBE[1] | | | | | 89.5 | 2.54 | 95.5 | 2.71 | | | | |
| DPM[2] | | | | | 83.9 | 2.38 | 86.7 | 2.46 | | | | |
| Esposol 260[3] | | | | | 107 | 3.04 | 87.6 | 2.49 | 54.0 | 21.4 | 49.5 | 19.6 |
| Total Kg/Hr | | 58.5 | | 53.6 | | 13.0 | | 13.8 | | 108 | | 119 |
| Calculated THC[4] | 102 | | 92 | | 208 | | 217 | | 163 | | 177 | |
| Measured THC[5] | 101 | | 96 | | 270 | | 270 | | 180 | | 160 | |
| Measured CH$_4$[6] | | | | | 69 | | 66 | | | | | |

[1] DBE=dibasic ester blend.
[2] DPM=dipropylene glycol monoethylether
[3] Esposol 260=$C_8$ and $C_9$ aliphatic blend
[4] From GC analysis as ppm v/v $C_3H_8$.
[5] From Beckman Analyzer as ppm v/v $C_3H_8$
[6] From TCA analysis as ppm v/v $C_3H_8$

TABLE 18
Daily average prime booth stack solvent emissions—120C trial

| Day | Day 1 | | Day 2 | | Day 3 | | Day 4 | |
|---|---|---|---|---|---|---|---|---|
| Solvent | mg/m³ | Kg/hr | mg/m³ | Kg/hr | mg/m³ | Kg/hr | mg/m³ | Kg/hr |
| MEK | 32.8 | 10.0 | 34.9 | 10.4 | 31.1 | 9.99 | 38.4 | 10.3 |
| MIBK | 1.59 | 0.49 | 3.82 | 1.13 | 3.30 | 1.06 | 2.98 | 0.88 |
| Isobutylacetate | 13.0 | 3.98 | 8.45 | 2.51 | 8.67 | 2.78 | 1.81 | 2.45 |
| N-butylacetate | 5.59 | 1.71 | 5.84 | 1.73 | 5.81 | 1.87 | 5.39 | 1.71 |
| Toluene | 12.5 | 3.82 | 9.66 | 2.87 | 9.95 | 3.19 | 7.42 | 2.99 |
| Pentoxone | 6.42 | 1.96 | 4.85 | 1.44 | 4.76 | 1.48 | 4.38 | 1.53 |
| Butylcellosolve | 2.96 | 0.91 | 3.05 | 0.91 | 2.97 | 0.95 | 2.54 | 0.87 |
| Cellosolve acetate | 57.6 | 17.62 | 60.8 | 18.0 | 53.8 | 17.3 | 62.4 | 17.65 |
| Xylenes | 28.3 | 8.65 | 26.4 | 7.85 | 26.4 | 8.46 | 25.4 | 8.03 |
| DBE | 14.6 | 4.48 | 13.3 | 3.94 | 13.2 | 4.25 | 11.67 | 4.00 |
| Total Kg/Hr | | 53.6 | | 50.8 | | 51.3 | | 45.9 |
| Calculated THC* | 70.4 | | 67.7 | | 64.1 | | 61.3 | |
| Measured THC** | 77 | | 73 | | 72 | | 66 | |

\* From GC analysis as ppm v/v $C_3H_8$
\*\* Measured with Beckman 402 Analyzer as ppm v/v $C_3H_8$

TABLE 19
Daily average prime bake oven stack solvent emissions—120C trial

| Solvent | Day 1 | | Day 2 | | Day 3 | | Day 4 | |
|---|---|---|---|---|---|---|---|---|
| | mg/l | Kg/hr | mg/l | Kg/hr | mg/l | Kg/hr | mg/l | Kg/hr |
| Xylenes | 19.5 | 0.51 | 21.6 | 0.59 | 16.5 | 0.46 | 19.1 | 0.56 |
| Cellosolve acetate | 96.0 | 2.50 | 101. | 2.78 | 102 | 2.83 | 105 | 3.10 |
| DBE[1] | 43.7 | 1.14 | 34.7 | 0.95 | 18.3 | 0.51 | 28.0 | 0.82 |
| DPM[2] | 39.8 | 1.04 | 41.7 | 1.14 | 28.6 | 0.79 | 28.3 | 0.83 |
| Esposol 260[3] | 106 | 2.76 | 103 | 2.84 | 68.2 | 1.89 | 57.2 | 1.68 |
| Solvesso 150[4] | 28.1 | 0.73 | 11.5 | 0.32 | 7.0 | 0.19 | 6.2 | 0.18 |
| Total Kg/Hr | | 8.68 | | 8.62 | | 6.67 | | 7.17 |
| Calculated THC[5] | 144 | | 134 | | 99 | | 96 | |
| Measured THC[6] | 200 | | 190 | | 185 | | 195 | |
| Average $CH_4$ as $C_3H_8$ | 34 | | 50 | | 63 | | 45 | |

[1] DBE=dibasic ester blend
[2] DPM=dipropylene glycol monoethyl ether
[3] Esposol 260=$C_8$ and $C_9$ aliphatic blend
[4] Solvesso 150=$C_{10}$ alkylated aromatic blend
[5] From GC analysis as ppm v/v $C_3H_8$
[6] Measured by Beckman 402 Analyzer as ppm v/v $C_3H_8$

TABLE 20
Daily average east main enamel booth stack emissions—120C trial

| Solvent | Day 1 mg/m³ | Kg/hr | Day 2 mg/m³ | Kg/hr | Day 3 mg/m³ | Kg/hr | Day 4 mg/m³ | Kg/hr |
|---|---|---|---|---|---|---|---|---|
| N-butanol | 11.4 | 4.07 | 18.1 | 6.49 | 16.1 | 5.76 | 17.9 | 6.41 |
| N-butylacetate | 26.0 | 9.30 | 23.8 | 8.51 | 25.0 | 8.94 | 25.9 | 9.26 |
| Toluene | 24.0 | 8.58 | 17.0 | 6.08 | 11.7 | 4.18 | 12.0 | 4.29 |
| Cellosolve acetate | 15.4 | 5.49 | 14.5 | 5.18 | 12.6 | 4.50 | 16.2 | 5.78 |
| Xylenes | 187 | 66.9 | 217 | 77.7 | 176 | 63.0 | 188 | 67.3 |
| Esposol 260 | 48.4 | 17.3 | 66.2 | 23.7 | 43.0 | 15.4 | 42.5 | 15.2 |
| MIBK | 1.6 | 0.55 | 2.4 | 0.85 | 5.3 | 1.83 | 2.8 | 0.97 |
| Total Kg/Hr[1] | | 112 | | 128 | | 104 | | 109 |
| Calculated THC[1] | 178 | | 208 | | 164 | | 173 | |
| Measured THC[2] | 225 | | 205 | | 195 | | 175 | |

[1] From GC analysis as ppm v/v $C_3H_8$
[2] From Beckman THC analyzer as ppm v/v $C_3H_8$

TABLE 21
Cellosolve acetate material balance in the east water pit system

| Day | Sprayed (Kg/hr) | | | Emitted (Kg/hr) | | | | | | Emitted / Sprayed |
|---|---|---|---|---|---|---|---|---|---|---|
| | Prime booth | Enamel booth | Total | Prime booth | Prime bake | Enamel booth | Enamel oven* | Water captured | Total | |
| **119B Trial** | | | | | | | | | | |
| Day 1 | 9.4 | 6.5 | 15.9 | 7.9 | 1.2 | 6.4 | 1.0 | 4.5 | 21.0 | 132 |
| Day 2 | 9.5 | 6.4 | 15.9 | 7.9 | 1.5 | 6.3 | 1.0 | 4.5 | 21.2 | 133 |
| Average | 9.4 | 6.5 | 15.9 | 7.9 | 1.3 | 6.3 | 1.0 | 4.5 | 21.1 | 133 |
| % Of sprayed | 59 | 41 | 100 | 50 | 8 | 40 | 6 | 28 | — | — |
| **120C Trial** | | | | | | | | | | |
| Day 1 | 35.0 | 4.9 | 39.9 | 16.2 | 2.8 | 6.0 | 1.0 | 11.9 | 37.9 | 95 |
| Day 2 | 36.7 | 4.8 | 41.5 | 14.4 | 3.0 | 5.7 | 1.2 | 11.9 | 36.2 | 87 |
| Day 3 | 34.7 | 4.5 | 39.2 | 17.8 | 3.1 | 4.3 | 0.8 | 11.9 | 37.9 | 97 |
| Day 4 | 39.3 | 4.3 | 43.6 | 17.6 | 3.6 | 5.2 | 1.1 | 11.9 | 39.4 | 90 |
| Average | 36.4 | 4.6 | 41.0 | 16.5 | 3.1 | 5.3 | 1.0 | 11.9 | 37.8 | 92 |
| % Of sprayed | 89 | 11 | 100 | 40 | 8 | 13 | 2 | 29 | — | — |

* Estimated from prime booth/oven emission ratio

TABLE 22
Prime booth system stack emission material balance

| Day | Kg/Hr Solvent | | | | Kg/Hr Carbon | | | |
|---|---|---|---|---|---|---|---|---|
| | Sprayed prime booth | Emitted prime booth | Emitted prime oven | Emitted / Sprayed | Sprayed prime booth | Emitted prime booth | Emitted prime oven | Emitted / Sprayed |
| 119B Trial | | | | | | | | |
| Day 1 | 60.1 | 58.5 | 13.0 | 1.19 | 46.1 | 46.0 | 9.6 | 1.20 |
| Day 2 | 61.3 | 53.6 | 13.8 | 1.10 | 47.1 | 41.5 | 10.1 | 1.10 |
| Average | 60.7 | 56.1 | 13.4 | 1.14 | 46.6 | 43.7 | 9.9 | 1.15 |
| 120C Trial | | | | | | | | |
| Day 1 | 64.3 | 51.7 | 8.68 | 0.94 | 40.1 | 34.7 | 6.15 | 1.02 |
| Day 2 | 66.2 | 49.4 | 8.62 | 0.88 | 41.2 | 29.3 | 6.03 | 0.86 |
| Day 3 | 62.4 | 49.8 | 6.67 | 0.91 | 37.6 | 33.1 | 4.54 | 1.00 |
| Day 4 | 67.1 | 44.7 | 7.12 | 0.77 | 38.8 | 29.3 | 4.79 | 0.88 |
| Average | 65.0 | 48.9 | 7.77 | 0.87 | 39.4 | 31.6 | 5.38 | 0.94 |

## 0 026 781

### Claims

1. A process for coating a workpiece which comprises spraying the workpiece in a spraybooth with a coating composition comprising a volatile organic compound having a boiling point of at least 98°C at normal atmospheric pressure and having a solubility in water of at least 6% by weight at 20°C; and scrubbing the atmospheric gases of the spraybooth with an aqueous scrubbing medium capable of capturing the volatile organic compound; characterised in that the concentration of said volatile organic compound in said aqueous scrubbing medium is adjusted during the coating process so that it does not exceed a concentration above that which causes the rate of removal of volatile organic compound from the atmospheric gases to be less than 10% of the rate of removal of the volatile organic compound from the atmospheric gases by the aqueous scrubbing medium when free from the volatile organic compound.

2. A process in accordance with Claim 1 wherein said scrubbing medium contains no more than 50 grams per litre of said volatile organic compound.

3. A process in accordance with Claim 1 or Claim 2 in which the workpiece is sprayed electrostatically.

4. A process in accordance with any one of Claims 1 to 3 wherein the volatile organic compound has a boiling point of at least 120°C.

5. A process in accordance with any one of Claims 1 to 3 wherein the volatile organic compound comprises an ester, an alcohol, an ether or a combination thereof.

6. A process in accordance with Claim 5 wherein said volatile organic compound comprises an etherically linked ester.

7. A process in accordance with Claim 6, wherein said volatile organic compound comprises an etherically linked ester.

8. A process in accordance with Claim 6, wherein said volatile organic compound comprises butyl carbitol.

9. A process in accordance with Claim 6 wherein said volatile organic compound comprises cellosolve acetate.

10. A process in accordance with any one of Claims 1 to 9 wherein aqueous scrubbing water contains no more than 25 grams per liter of said volatile organic compound.

11. A process in accordance with any one of Claims 1 to 10 in which the concentration of volatile organic compound in the aqueous scrubbing medium is maintained below the predetermined level by replenishing the aqueous scrubbing medium with water.

12. A process in accordance with any one of Claims 1 to 11 wherein the concentration of the volatile organic compound in the aqueous scrubbing medium is maintained below the predetermined level by biologically and/or physicochemically removing a portion of said volatile organic compound from the aqueous scrubbing medium.

### Patantanprüche

1. Verfahren zur Beschichtung eines Werkstücks, bei dem man das Werkstück in einer Spritzkabine mit einer Beschichtungszusammensetzung spritzt, die eine flüchtige organische Verbindung mit einem Siedepunkt von mindestens 98°C bei normalen Atmosphärendruck und mit einer Wasserlöslichkeit von mindestens 6 Gew.-% bei 20°C enthält, und die Gase aus der Spritzkabinenatmosphäre mit einem wässrigen Waschmedium wäscht, das die flüchtige organische Verbindung abfangen kann, dadurch gekennzeichnet, dass die Konzentration dieser flüchtigen organischen Verbindung in diesem wässrigen Waschmedium während des Beschichtungsvorgangs so eingestellt wird, dass sie eine Konzentration nicht übersteigt, oberhalb derer die Geschwindigkeit der Entfernung der flüchtigen organischen Verbindung aus den Atmosphärengasen unter 10% derjenigen Geschwindigkeit absinkt, mit der die flüchtige organische Verbindung aus den Atmosphärengasen durch das wässrige Waschmedium entfernt wird, wenn dieses von der flüchtigen organischen Verbindung frei ist.

2. Verfahren nach Anspruch 1, worin dieses Waschmedium nicht mehr als 50 Gramm pro Liter dieser flüchtigen organischen Verbindung enthält.

3. Verfahren nach Anspruch 1 oder 2, bei dem das Werkstück elektrostatisch gespritzt wird.

4. Verfahren nach einem der Ansprüche 1 bis 3, worin die flüchtige organische Verbindung einen Siedepunkt von mindestens 120°C besitzt.

5. Verfahren nach einem der Ansprüche 1 bis 3, worin die flüchtige organische Verbindung aus einem Ester, Alkohol, Aether oder einer Kombination von diesen besteht.

6. Verfahren nach Anspruch 5, worin diese flüchtige organische Verbindung aus einem Ester mit einer Aetherbindung besteht.

7. Verfahren nach Anspruch 6, worin diese flüchtige organische Verbindung aus einem Ester mit einer Aetherbindung besteht. (!)

8. Verfahren nach Anspruch 6, worin diese flüchtige organische Verbindugn aus Butylcarbitol besteht.

24

9. Verfahren nach Anspruch 6, worin diese flüchtige organische Verbindung aus Cellosolve-Acetat besteht.

10. Verfahren nach einem der Ansprüche 1 bis 9, worin das wässrige Waschmedium nicht mehr als 25 Gramm pro Liter dieser flüchtigen organischen Verbindung enthält.

11. Verfahren nach einem der Ansprüche 1 bis 10, worin die Konzentration der flüchtigen organischen Verbindung in dem wässrigen Waschmedium dadurch unter dem vorbestimmten Wert gehalten wird, dass man das wässrige Waschmedium mit Wasser auffüllt.

12. Verfahren nach einem der Ansprüche 1 bis 11, worin die Konzentration der flüchtigen organischen Verbindung in dem wässrigen Waschmedium unterhalb des vorbestimmten Werts gehalten wird, indem man einen Teil dieser flüchtigen organischen Verbindung biologisch und/oder physiko-chemisch aus dem wässrigen Waschmedium entfernt.

**Revendications**

1. Procédé de revêtement d'une pièce de travail, ce procédé consistant à pulvériser, sur la pièce de travail et dans une cabine de pulvérisation, une composition de revêtement comprenant un composé organique volatil ayant un point d'ébullition d'au moins 98°C sous pression atmosphérique normale et une hydrosolubilité d'au moins 6% en poids à 20°C, puis épurer les gaz atmosphériques de la cabine de pulvérisation avec un milieu d'épuration aqueux capable d'emprisonner le composé organique volatil, caractérisé en ce que la concentration du composé organique volatil dans le milieu d'épuration aqueux est réglée au cours du procédé de revêtement de telle sorte qu'elle ne dépasse pas une concentration au-delà de laquelle la vitesse d'élimination du composé organique volatil hors des gaz atmosphériques est inférieure à 10% de la vitesse d'élimination du composé organique volatil hors des gaz atmosphériques par le milieu d'epuration aqueux en absence du composé organique volatil.

2. Procédé suivant la revendication 1, caractérisé en ce que le milieu d'épuration ne contient pas plus de 50 g/litre de ce composé organique volatil.

3. Procédé suivant la revendication 1 ou 2, caractérisé en ce que la pièce de travail reçoit la pulvérisation par voie électrostatique.

4. Procédé suivant l'une quelconque des revendications 1 à 3, caractérisé en ce que le composé organique volatil a un point d'ébullition d'au moins 120°C.

5. Procédé suivant l'une quelconque des revendications 1 à 3, caractérisé en ce que le composé organique volatil est un ester, un alcool, un éther ou une combinaision de ceux-ci.

6. Procédé suivant la revendication 5, caractérisé en ce que le composé organique volatil est un ester à liaison éther.

7. Procédé suivant la revendication 6, caractérisé en ce que le composé organique volatil est un ester à liaison éther.

8. Procédé suivant la revendication 6, caractérisé en ce que le composé organique volatil est le butyl-carbitol.

9. Procédé suivant la revendication 6, caractérisé en ce que le composé organique volatil est l'acétate de cellosolve.

10. Procédé suivant l'une quelconque des revendications 1 à 9, caractérisé en ce que le milieu d'épuration aqueux ne contient pas plus de 25 g/litre du composé organique volatil.

11. Procédé suivant l'une quelconque des revendications 1 à 10, caractérisé en ce que la concentration du composé organique volatil dans le milie d'épuration aqueux est maintenue en dessous du niveau prédéterminé en complétant le milieu d'épuration aqueux avec de l'eau.

12. Procédé suivant l'une quelconque des revendications 1 à 11, caractérisé en ce que la concentration du composé organique volatil dans le milieu d'épuration aqueux est maintenue en dessous du niveau prédéterminé en éliminant une portion de ce composé organique volatil du milieu d'épuration aqueux par voie biologique et/ou par voie physicochemique.

FIG. 1.

Clean Air

Low Energy Scrubber

Water Wash Back Section

Paint Spray

Water Wash Back Section

Low Energy Scrubber

Water Treatment Compound

Air

Air

Water

Water

Water Inlet

Grate

Water Outlet

Water Treatment and Solids Filter

Water

# FIG.2.

**Pilot Spraybooth**

Exhaust Flow

Water Curtain

Solids Removal Filter System

Spray Gun

Water

Vent

Vent

GC Samples

Bypass

Dry Test Meter

Analyzer

Heat Traced

Filter

3/16" Nozzle

**Pilot Spraybooth THC and GC Sampling System**

# FIG.3.

Exhaust Flow

Assembly Plant (AP) East Water Pit System,
Air Emission Sampling Lines, and Analyzers

Solvent Uptake in Booth Water - Pilot Experiment I

FIG. 5.

Solvent Uptake in Booth Water - Pilot Experiment II

FIG. 6

FIG. 7.

Solvent Uptake in Booth Water - Pilot Experiment III

Backsection Scrubbing VOC Abatement

FIG 10

5

Solvent Uptake in Booth Water – HP 119B Trial

Legend:
- × n-butanol
- ○ Pentoxone
- □ 2-ethylhexanol
- + Butylcellosolve

Y-axis (left): Mg/l Volatile Organic Compound in Booth Water
Y-axis (right): Kilograms of Volatile Organic Compound in Booth Water
X-axis: Spraying Time, hours

Curves labelled: Cellosolve Acetate, n-butanol, Pentoxone, Butylcellosolve, 2-ethylhexanol

FIG. 8.

0 026 781

Fig. 9.

Solvent Uptake in Booth Water — HP 120C Trial

Mg/l Volatile Organic Compound in Booth Water

×  n-butanol
○  Butylcellosolve
+  Pentoxone

Cellosolve Acetate

n-butanol

Pentoxone

Butylcellosolve

Spraying Time, Hours

Kilograms of Volatile Organic Compound in Booth Water

AP Stack Sampling Port and Flow
Measurement Port Locations
(Side View)

4ft

Sample Port - Prime
Spraybooth Stacks

Flow Measurement
Ports - Prime Spray-
booth Stacks

5ft

Fan Housing

Dilution Air Vent
(Closed - Prime Booth
Open - Enamel Booth)

Exhaust Blower
Level

Sample Port - East
Main Enamel Stacks

4ft

Flow Measurement Ports
East Main Enamel Stacks

Roof Level

FIG. 11.

**AP Prime Spraybooth Stack Sampling System**

Spray-booth Stacks

1/4" heat-traced line    3/8" heat-traced line

Oven

Bypass    Analyzer    Pump

GC Samples

TCA Samples    Dry Test Meter

Vent    Vent

FIG. 12.

P

From Stack

Rotameter

Quick-Connects

15 Micron Filter    To THC Analyzer

On/Off    Regulating Valve

**AP Stack Sample Manifold Flow Regulation System**

FIG. 13.

9

*AP East Main Enamel Spraybooth Sampling System*

Vent

Vent

GC Samples

Dry Test Meter

Heat Tracing

Analyzer

Pump

3/8" heat traced line

Spraybooth Stacks

1/4" heat-traced line

East ←

FIG. 14.